# EUROPÄISCHE PATENTSCHRIFT

(11) **EP 2 158 243 B1**
(45) Veröffentlichungstag und Bekanntmachung des Hinweises auf die Patenterteilung: **22.09.2010**
(21) Anmeldenummer: 08759656.5
(22) Anmeldetag: 16.05.2008
(51) Int. Cl.: C08G 18/32, C08G 18/76, C08G 101/00

(54) **VERFAHREN ZUR HERSTELLUNG VON ORGANISCHEN XEROGELEN**
METHOD FOR PRODUCTION OF ORGANIC XEROGELS
PROCÉDÉ DE PRODUCTION DE XEROGELS ORGANIQUES

(30) Priorität: 16.05.2007 EP 07108309
(43) Veröffentlichungstag der Anmeldung: 03.03.2010
(73) Patentinhaber: BASF SE, 67056 Ludwigshafen (DE)
(72) Erfinder: SCHÄDLER, Volker, Ann Arbor, Mi 48104 (US); RAMAN, Vijay Immanuel, 68163 Mannheim (DE); FRICKE, Marc, 49080 Osnabrück (DE)
(86) Internationale Anmeldenummer: PCT/EP2008/056007
(87) Internationale Veröffentlichungsnummer: WO 2008/138977

(56) Entgegenhaltungen:
- WO-A-98/44013
- US-A- 6 063 826
- JU-YOUNG KIM ET AL: "SWELLING BEHAVIOR OF NOVEL POLYURETHANE HYDRO-XEROGELS" POLYMER BULLETIN, SPRINGER, HEIDELBERG, DE, Bd. 36, Nr. 6, 1. Juni 1996 (1996-06-01), Seiten 737-744, XP000588751 ISSN: 0170-0839

## Beschreibung

Die Erfindung betrifft ein Verfahren zur Herstellung von organischen Xerogelen umfassend:
(a) Bereitstellen einer Zusammensetzung enthaltend eine organische Gelvorstufe (A) und ein Lösungsmittel (C);
(b) Umsetzung der Gelvorstufe (A) in Gegenwart des Lösungsmittels (C) zu einem Gel;
(c) Modifizierung des erhaltenen Gels mittels mindestens einer organischen Verbindung (D), welche weder in Schritt (a) noch in Schritt (b) zugegen war;
(d) Trocknen des modifizierten Gels durch Überführung des Lösungsmittels (C) in den gasförmigen Zustand bei einer Temperatur und einem Druck unterhalb der kritischen Temperatur und des kritischen Drucks des Lösungsmittels (C).

Weiterhin betrifft die Erfindung die so erhältlichen organischen Xerogele sowie deren Verwendung als Dämmstoff.

Nanoporöse Materialien mit einer mittleren Porengröße von deutlich unter 1 µm und einer Porosität von mindestens 70 % sind aufgrund theoretischer Überlegungen besonders gute Wärmeisolatoren.

Solche nanoporösen Materialien können beispielsweise als organische Xerogele vorliegen. In der Literatur wird der Begriff Xerogel nicht durchweg einheitlich verwendet. Im Allgemeinen wird unter einem Xerogel ein poröses Material verstanden, welches durch ein Sol-Gel-Verfahren hergestellt wurde, wobei die flüssige Phase durch Trocknung unterhalb der kritischen Temperatur und unterhalb des kritischen Drucks der flüssigen Phase ("subkritische Bedingungen") aus dem Gel entfernt wurde. Im Gegensatz hierzu spricht man im Allgemeinen von Aerogelen, wenn die Entfernung der flüssigen Phase aus dem Gel unter überkritischen Bedingungen durchgeführt wurde.

Beim Sol-Gel-Verfahren wird zunächst ein Sol auf Basis einer reaktiven organischen Gelvorstufe hergestellt und danach das Sol durch eine vernetzende Reaktion zu einem Gel geliert. Um aus dem Gel ein poröses Material, beispielsweise einen Schaum, zu erhalten, muss die Flüssigkeit entfernt werden. Dieser Schritt wird nachfolgend vereinfachend als Trocknung bezeichnet.

Nach den Verfahren des Standes der Technik lässt sich die Flüssigkeit aus dem Gel beispielsweise unter überkritischen Bedingungen bzw. durch überkritische Fluide entfernen, also bei Drucken und Temperaturen oberhalb des kritischen Drucks pₖᵣᵢₜ bzw. der kritischen Temperatur Tₖᵣᵢₜ der Flüssigkeit. Solche Trocknungsverfahren, die überkritische Trocknung einschließen, sind weitläufig bekannt.

Die Trocknung unter überkritischen Bedingungen ist jedoch apparativ sehr aufwendig, da in geschlossenen Behältern bei definierten Druck- und Temperaturbedingungen gearbeitet werden muss. Außerdem sind Lösungsmittelwechsel erforderlich. Dies verkompliziert das Verfahren zusätzlich. Eine Trocknung mit überkritischen Fluiden vermindert daher die Wirtschaftlichkeit. Alternativ kann die Flüssigkeit durch Gefriertrocknen entfernt werden. Allerdings verändert die Flüssigkeit beim Gefrieren ihr Volumen, wodurch das räumliche Polymernetzwerk zerstört wird. Man erhält auf diese Weise keinen Schaum, sondern ein Pulver. Zudem ist auch ein Gefriertrocknungsschritt apparativ aufwendig.

Wird ein Gel in einem subkritischen Verfahrensschritt getrocknet, dann verändert sich im Allgemeinen die Porenstruktur und das Gel schrumpft unter gleichzeitiger Erniedrigung der Porosität des so erhaltenen Xerogels im Vergleich zur analogen Entfernung des Lösungsmittels unter überkritischen Bedingungen. Der Grund sind die während des Verdampfens des Lösungsmittels unter subkritischen Bedingungen wirkenden Kapillarkräfte. Die Kapillarkräfte sind zudem bei mittleren Porengrößen kleiner 1 Mikrometer besonders stark, da sie umgekehrt proportional mit abnehmender Porengröße ansteigen.

Bekannte Strategien zur Verringerung der Schrumpfung umfassen die Herstellung eines ausreichend steifen beziehungsweise stabilen Gels mittels spezifischer Zusammensetzungen sowie die Verringerung der Kapillarkräfte beispielsweise durch Austausch des Lösungsmittels gegen ein weniger polares Lösungsmittel, das bei der Trocknung des Gels eine geringere Schrumpfung verursacht.

Ein Austausch des Lösungsmittels ist jedoch apparativ aufwendig und in vielen Fällen unerwünscht. Zudem führt die sub-kritische Trocknung des Gels auch nach dem Austausch des Lösungsmittels gegen eines, welches geringere Kapillarkräfte verursacht, oft dennoch zu einer Verringerung der Porosität.

Bekannte organische Xerogele sind beispielsweise auf Basis von Phenol-Aldehyd-Harzen oder auf Basis von Polyurethan und/oder Polyharnstoff aufgebaut. Verfahren zu deren Herstellung, die alternative Maßnahmen zur Begrenzung der Schrumpfung während des Trocknens vorsehen, sind an sich ebenfalls bekannt. Die bekannten Verfahren, welche einen Austausch des zu extrahierenden Lösungsmittels nicht erfordern, beruhen jedoch auf spezifischen Zusammensetzungen, die ein ausreichend stabiles poröses Material bilden.

So offenbart die WO-06/128872 poröse Polyadditionsprodukte auf Basis von Polyisocyanat, insbesondere Polyurethane und/oder Polyharnstoffe, welche über ein Sol-Gel-Verfahren hergestellt werden. Die so hergestellten Schäume weisen gemäß der Beschreibung bevorzugt Aerogel-artige Strukturen mit hoher Porosität und eine Porengröße im Nanometerbereich auf. Bedingt durch einen hohen Verzweigungsgrad durch Wahl bestimmter reaktiver Komponenten sind für die Entfernung des Lösungsmittels aus dem Gel aufgrund der Rigidität und der mechanischen Stabilität auch während der Trocknung überkritische Bedingungen gemäß der Beschreibung nicht unbedingt erforderlich. Die guten Eigenschaften der Aerogel-artigen Strukturen werden jedoch bevorzugt durch Austausch des Lösungsmittels gegen ein Lösungsmittel mit niedriger Oberflächenspannung erzielt. Es können jedoch lediglich Schäume mit spezifischer Zusammensetzung hergestellt werden.

Das US-Patent 5,948,482 beschreibt ein Verfahren zur Herstellung von porösen Filmen unter subkritischen Trocknungsbedingungen in einem kontinuierlichen Verfahren, die gemäß Beschreibung als Aerogel-Filme bezeichnet werden. Offenbart werden darin anorganische Gele, deren Oberfläche derivatisiert wird, um sie unreaktiv gegenüber weiterer Kondensation zu machen und um den Kontaktwinkel zwischen Flüssigkeit und Festphase zu modifizieren. Als geeignete Modifizierungsmittel werden beispielsweise organofunktionelle Silane, Alkoholamine, Carboxylsäuren und beta-Diketone genannt.

Das US-Patent 5,565,142 offenbart Xerogele, welche durch Trocknung von wasserhaltigen Gelen unter sub-kritischen Bedingungen hergestellt werden. Dies wird durch Umsetzung der internen Porenoberfläche des Gels mit Verbindungen erzielt, welche den Kontaktwinkel zwischen Flüssigkeit und Festphase während der Trocknung verändern. Als Modifizierungsmittel werden metallorganische Verbindungen eingesetzt. Das Verfahren umfasst zwingend den Austausch von Wasser gegen ein organisches Lösungsmittel.

Es bestand die Aufgabe, ein Verfahren zur Herstellung von organischen Xerogelen zu finden, mittels dessen eine große Bandbreite unterschiedlichster organischer Xerogele zugänglich wird. Insbesondere sollte ein Verfahren zur Herstellung nanoporöser Polymerschäume mit volumengewichteten mittleren Porengrößen kleiner 1 Mikrometer bereitgestellt werden, das sich durch Einfachheit auszeichnet. Das Verfahren sollte die Trocknung des Polymergels bei geringem Energieverbrauch und hohen Raum-Zeit-Ausbeuten ermöglichen.

Das Verfahren sollte organische Xerogele mit hoher Porosität, ganz besonders solche mit einer Porosität von mindestens 70 Vol.-%, ohne die Anwendung überkritischer Bedingungen bzw. überkritischer Fluide zugänglich zu machen. Außerdem sollte es nicht erforderlich sein, das im Gel enthaltene Lösungsmittel vor dem Trocknen gegen ein alternatives Lösungsmittel auszutauschen. Insbesondere sollte es dabei nicht notwendig sein, ein im Gel enthaltenes polares Lösungsmittel wie Wasser, ein Alkohol, ein Keton, N-Methylpyrolidon oder Dimethylsulfoxid vor der subkritischen Trocknung gegen ein alternatives, insbesondere gegen ein weniger polares, Lösungsmittel auszutauschen.

Gleichzeitig sollten die aus dem Verfahren erhältlichen Xerogele eine geringere Wasseraufnahme beispielsweise durch Einkondensation während des späteren Einsatzes zeigen. Die Empfindlichkeit des dabei erhaltenen Schaums gegenüber Wasser sollte verringert werden.

Demgemäß wurde das eingangs definierte Verfahren und die nach dem Verfahren erhältlichen organischen Xerogele gefunden.

Bevorzugte Ausführungsformen sind den Ansprüchen und der Beschreibung zu entnehmen. Kombinationen bevorzugter Ausführungsformen verlassen nicht den Rahmen dieser Erfindung.

### Schritte a und b

Erfindungsgemäß erfolgt in Schritt (a) das Bereitstellen einer Zusammensetzung enthaltend eine organische Gelvorstufe (A) und ein Lösungsmittel (C). Unter Gelvorstufe ist dabei eine gelierbare Verbindung oder eine gelierbare Mischung mehrerer Verbindungen zu verstehen. Die organische Gelvorstufe (A) wird anschließend in Schritt (b) in Gegenwart des Lösungsmittels (C) zu einem Gel, ein vernetztes Polymer, umgesetzt.

In Schritt (a) des erfindungsgemäßen Verfahrens stellt man somit eine Zusammensetzung enthaltend eine organische Gelvorstufe (A) in einem flüssigen Verdünnungsmittel bereit. Der Begriff Lösungsmittel (C) umfasst im Rahmen dieser Erfindung flüssige Verdünnungsmittel, das heißt sowohl Lösungsmittel im engeren Sinne als auch Dispersionsmittel. Die Zusammensetzung kann beispielsweise eine echte Lösung, eine kolloidale Lösung oder eine Dispersion, z.B. eine Emulsion oder Suspension, sein. Das Lösungsmittel (C) ist eine unter den Bedingungen des Schrittes (a) flüssige Verbindung, bevorzugt Wasser oder ein organisches Lösungsmittel.

Bei der organischen Gelvorstufe (A) kann es sich um ein oder mehrere Monomere handeln oder um ein oder mehrere Präpolymere oder um eine Mischung aus einem oder mehreren Monomeren und einem oder mehreren Präpolymeren. Die erfindungsgemäß in Schritt (a) bereitgestellte Zusammensetzung kann zudem weitere Bestandteile (B), zum Beispiel Katalysatoren (b1), enthalten.

Als Bestandteile der organischen Gelvorstufe (A) kommen grundsätzlich solche Verbindungen in Betracht, die sich im Lösungsmittel (C) lösen oder dispergieren, bevorzugt lösen, und anschließend vernetzen lassen. Auf Basis verschiedener Vernetzungsreaktionen kommen als organische Gelvorstufe (A) unterschiedliche chemische Systeme in Betracht.

In Betracht kommende organische Gelvorstufen (A) sind insbesondere Polykondensations-Reaktivharze. Unter Polykondensations-Reaktivharzen sind Monomere beziehungsweise niedermolekulare Bausteine oder Präpolymere oder Mischungen aus Präpolymeren und Monomeren beziehungsweise niedermolekularen Bausteinen zu verstehen, die im Zuge einer Polykondensation zu einem vernetzten Polymer umgesetzt werden können. Als Polykondensations-Reaktivharze werden vorzugsweise Präpolymere oder Mischungen aus Präpolymeren und Monomeren eingesetzt. Beispiele für solche Polykondensations-Reaktivharze sind allgemein bekannte Präpolymere auf Basis von Aldehyden und mehrfunktionellen Aminen beziehungsweise aromatischen Hydroxy-Verbindungen (phenolische Verbindungen), die durch Gelierung zu einem vernetzten Aminoplast beziehungsweise zu einem vernetzten Phenoplast umgesetzt werden können.

Außerdem kommen als organische Gelvorstufe (A) solche auf Basis von Polyisocyanat in Betracht. Insbesondere kann ein Polyisocyanat mit geeigneten mehrfunktionellen Aminen und/oder Hydroxylgruppen-haltigen Verbindungen zu Polyharnstoffen und/oder Polyurethanen im Zuge einer Polyadditionsreaktion in Anwesenheit des Lösungsmittels (C) zu einem Gel umgesetzt werden.

Unter dem Begriff "auf Basis von" einer Komponente oder "auf Basis von" mehreren Komponenten ist zu verstehen, dass die betreffende Komponente oder die betreffenden Komponenten in einer hinsichtlich der Endeigenschaften bedeutenden Menge in einer Verbindung oder in einer Mischung enthalten sind und in der betreffenden Verbindung oder Mischung die in Gew.-% überwiegende Komponente darstellen, bevorzugt mindestens 60 Gew.-%, insbesondere mindestens 70 Gew.-%, wobei die betreffende Komponente oder die betreffenden Komponenten in der ursprünglichen Form oder in einer umgesetzten Form enthalten sein können. Falls zur Umsetzung der betreffenden Komponente, beispielsweise ein Polyisocyanat, noch ein oder mehrere weitere reaktive Komponenten eingesetzt werden müssen, beispielsweise eine gegenüber Isocyanaten reaktive Komponente, dann ist unter "auf Basis von" zu verstehen, dass die erste Komponente und die zur Umsetzung noch erforderliche weitere Komponenten als zusammen, d. h. in der Summe, in Gew.-% überwiegende Komponenten, bevorzugt zusammen mindestens 60 Gew.-%, insbesondere zusammen mindestens 70 Gew.-%, enthalten sind. Besonders bevorzugt besteht die betreffende Verbindung oder Mischung "auf Basis von" einer Komponente oder "auf Basis von" mehreren Komponenten im wesentlichen aus der Komponente oder den Komponenten. Ganz besonders bevorzugt besteht die betreffende Verbindung oder Mischung aus 100 Gew.-% der Komponente oder den Komponenten.

Erfindungsgemäß erfolgt in Schritt (b) die Umsetzung der Gelvorstufe (A) in Gegenwart des Lösungsmittels (C) zu einem Gel. In Schritt (b) des erfindungsgemäßen Verfahrens wird somit die organische Gelvorstufe (A) in einer Gelierungsreaktion zu einem Gel umgesetzt. Bei der Gelierungsreaktion handelt es sich üblicherweise um eine Polykondensations- oder um eine Polyadditionsreaktion.

Unter einem Gel soll ein vernetztes System auf Basis eines Polymers verstanden werden, das in Kontakt mit einer Flüssigkeit (sog. Solvogel oder Lyogel, bzw. mit Wasser als Flüssigkeit: Aquagel oder Hydrogel) vorliegt. Dabei bildet die Polymerphase ein kontinuierliches räumliches Netzwerk. Die Zusammensetzung aus Schritt (a) kann auch als Sol bezeichnet werden. Es soll dabei unter einem Sol sowohl eine kolloidale Lösung verstanden werden, in der die organische Gelvorstufe (A) feinstverteilt in einem Lösungsmittel als Dispersionsmedium dispergiert ist, oder um eine echte Lösung der organischen Gelvorstufe (A) in einem Lösungsmittel.

Die Zusammensetzung der organischen Gelvorstufe (A) wird bevorzugt so gewählt, dass nach erfolgter Gelierung in Schritt (b) das Gel noch reaktive Gruppen aufweist, welche in Schritt (c) durch chemische Reaktion mit einer organischen Verbindung (D) umgesetzt werden können, die weder in Schritt (a) noch in Schritt (b) zugegen war. Beispielsweise kann die organische Gelvorstufe (A) reaktive Gruppen enthalten, die erst mit der Verbindung (D) reagieren. In einer besonders bevorzugten Ausführungsform reagiert die organische Verbindung (D) mit reaktiven Gruppen des in Schritt (b) erhaltenen Gels, die bereits in der organischen Gelvorstufe (A) vorhanden waren. Ganz besonders bevorzugt wurden die genannten reaktiven Gruppen im Rahmen der Umsetzung zu einem Gel in Schritt (b) nicht vollständig chemisch umgesetzt. Unter reaktiver Gruppe soll dabei eine funktionelle Gruppe oder eine reaktive Stelle in einem Molekül, beispielsweise eine Position in einem aromatischen Ring, verstanden werden, die gegenüber der Verbindung (D) reaktiv ist.

Als Lösungsmittel (C) kommen prinzipiell eine oder ein Gemisch aus mehreren Verbindungen in Betracht, wobei das Lösungsmittel (C) bei den Temperatur- und Druckbedingungen, unter denen die Mischung in Schritt (a) bereitgestellt wird (kurz: Lösungsbedingungen), flüssig ist. Die Zusammensetzung des Lösungsmittels (C) wird so gewählt, dass es in der Lage ist, die organische Gelvorstufe (A) zu lösen oder zu dispergieren, bevorzugt zu lösen. Bevorzugte Lösungsmittel (C) sind solche, die ein Lösungsmittel für die organische Gelvorstufe (A) sind, d. h. solche, die die organische Gelvorstufe (A) unter Reaktionsbedingungen vollständig lösen.

Das Reaktionsprodukt aus Schritt (b) ist ein Gel, d. h. ein viskoelastisches chemisches Netzwerk, das durch das Lösungsmittel (C) gequollen ist. Ein Lösungsmittel (C), welches ein gutes Quellmittel für das in Schritt (b) gebildete Netzwerk darstellt, führt in der Regel zu einem Netzwerk mit feinen Poren und kleinem mittleren Porendurchmesser, wohingegen ein Lösungsmittel (C), welches ein schlechtes Quellmittel für das aus Schritt (b) resultierende Gel darstellt, in der Regel zu einem grobporigen Netzwerk mit großem mittleren Porendurchmesser führt.

Die Wahl des Lösungsmittels (C) hängt somit unter anderem von der chemischen Natur der Gelvorstufe (A) ab und erfolgt beispielsweise in Hinblick auf die angestrebte Porengrößenverteilung und die angestrebte Porosität. Die Wahl des Lösungsmittels (C) erfolgt im Allgemeinen zudem so, dass ein Ausfällen oder Ausflocken des Reaktionsproduktes während oder nach Schritt (b) des erfindungsgemäßen Verfahrens weitestgehend nicht auftritt.

Insbesondere setzt man als Lösungsmittel (C) solche Lösungsmittel ein, bei deren Einsatz durch Gelierung der organischen Gelvorstufe (A) in Schritt (b) des erfindungsgemäßen Verfahrens ein makroskopischer Gelkörper resultiert, und durch deren Einsatz im wesentlichen keine Ausfällung oder Ausflockung durch Bildung eines präzipitierten Reaktionsproduktes erfolgt. Bei Wahl eines geeigneten Lösungsmittels (C) ist der Anteil an präzipitiertem Reaktionsprodukt üblicherweise kleiner als 1 Gew.-%, bezogen auf das Gesamtgewicht der Mischung. Die Menge an gebildetem präzipitiertem Produkt in einem bestimmten Lösungsmittel (C) kann gravimetrisch bestimmt werden, indem die Reaktionsmischung vor dem Gelpunkt über ein geeignetes Filter filtriert wird.

Bevorzugte Lösungsmittel sind im Rahmen dieser Erfindung polare oder moderat polare Lösungsmittel, das heißt, unpolare Lösungsmittel wie Kohlenwasserstoffe sind nicht bevorzugt. Bevorzugte polare oder moderat polare Lösungsmittel sind beispielsweise Wasser, niedermolekulare Alkohole wie Methanol, Ethanol, n- und/oder iso-Propanol, n-Butanol, Ketone mit Alkylgruppen mit bis zu 3 Kohlenstoffatomen pro Substituent wie zum Beispiel Aceton, Methylethylketon und Butanon, N-Methylpyrolidon, Chloroform, Dichlormethan und Dimethylsulfoxid. Besonders bevorzugte Lösungsmittel werden im Zusammenhang mit den bevorzugten Ausführungsformen I und II weiter unten diskutiert.

Typischerweise beträgt der Anteil der organischen Gelvorstufe (A) in der Zusammensetzung in Schritt (a) des erfindungsgemäßen Verfahrens von 5 bis 50 Gew.-%, insbesondere von 5 bis 30 Gew.-%, besonders bevorzugt von 10 bis 20 Gew.-%, zum Beispiel von 10 bis 15 Gew.-%.

Die in Schritt (a) bereitgestellte Zusammensetzung kann außerdem übliche, dem Fachmann bekannte Hilfsmittel als weitere Bestandteile (B) enthalten. Genannt seien beispielsweise oberflächenaktive Substanzen, Flammschutzmittel, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel und Biozide.

Nähere Angaben über die oben genannten Hilfsmittel- und Zusatzstoffe sind der Fachliteratur zu entnehmen, z.B. aus Plastics Additive Handbook, 5th edition, H. Zweifel, ed, Hanser Publishers, München, 2001.

Das Bereitstellen der Zusammensetzung gemäß Schritt (a) des erfindungsgemäßen Verfahrens kann auf übliche Weise erfolgen. Bevorzugt wird dazu ein Rührer oder eine andere Mischvorrichtung eingesetzt, um eine gute Durchmischung zu erzielen. Die sonstigen Mischbedingungen sind in der Regel nicht kritisch, beispielsweise kann man bei 0 bis 100°C und 0,1 bis 10 bar (absolut), insbesondere z.B. bei Raumtemperatur und Atmosphärendruck, mischen.

Im Rahmen von Schritt (b) des erfindungsgemäßen Verfahrens entsteht das Gel üblicherweise durch Ruhenlassen, z.B. durch einfaches Stehenlassen des Behälters, Reaktionsgefäßes oder Reaktors, in dem sich die Mischung befindet (im folgenden Geliervorrichtung genannt). Bevorzugt wird während des Gelierens (Gelbildung) die Mischung nicht gerührt oder durchmischt, weil dies die Ausbildung des Gels behindern könnte. Es hat sich als vorteilhaft erwiesen, die Mischung während des Gelierens abzudecken bzw. die Geliervorrichtung zu verschließen.

Die Dauer des Gelierens variiert je nach Art und Menge der eingesetzten Komponenten und der Temperatur und kann mehrere Tage betragen. Üblicherweise beträgt sie von 1 Minute bis 10 Tage, bevorzugt weniger als 1 Tag, insbesondere von 5 Minuten bis 12 Stunden, besonders bevorzugt höchstens 1 Stunde, insbesondere von 5 Minuten bis 1 Stunde.

Die Gelierung kann dabei ohne Wärmezuführung bei einer Temperatur im Bereich der Raumtemperatur durchgeführt werden, insbesondere von 15 bis 25 °C, oder bei einer gegenüber der Raumtemperatur erhöhten Temperatur, die 20°C oder mehr beträgt, insbesondere von 25°C bis 80°C. Üblicherweise verkürzt eine höhere Gelierungstemperatur die Dauer der Gelierung. Eine höhere Gelierungstemperatur ist jedoch nicht in allen Fällen vorteilhaft, da eine erhöhte Gelierungstemperatur zu Gelen mit unzureichenden mechanischen Eigenschaften führen kann. Demzufolge hängt die geeignete Temperatur in Schritt (b) von der Art der Gelvorstufe (A) ab. Näheres ist bei den bevorzugten Ausführungsformen I und II beschrieben.

Der Druck beim Gelieren kann in einem weiten Bereich variieren und ist im Allgemeinen nicht kritisch. Er kann beispielsweise von 0,1 bar bis 10 bar betragen, bevorzugt 0,5 bar bis 8 bar und insbesondere 0,9 bis 5 bar (jeweils absolut). Insbesondere kann man wässrige Mischungen bei Raumtemperatur und Atmosphärendruck gelieren lassen.

Während des Gelierens erstarrt die Zusammensetzung zu einem mehr oder weniger formbeständigen Gel. Daher kann man die Gelbildung in einfacher Weise daran erkennen, dass sich der Inhalt der Geliervorrichtung nicht mehr bewegt, wenn die Geliervorrichtung oder ein Behälter, mit dem eine Probe entnommen wurde, langsam schräggestellt wird. Außerdem ändern sich bei der Gelierung die akustischen Eigenschaften der Zusammensetzung: die gelierte Zusammensetzung ergibt beim Klopfen auf die äußere Wand der Geliervorrichtung einen anderen, brummenden Klang als die noch nicht gelierte Zusammensetzung (sog. Brummgel).

In einer bevorzugten Ausführungsform wird das bei der Gelierung in Schritt (b) erhaltene Gel vor der Durchführung von Schritt (c) noch einer sogenannten Alterung unterworfen, bei der sich die Ausbildung des Gels vervollständigt. Die Alterung erfolgt beispielsweise dadurch, dass man das Gel einige Zeit einer höheren Temperatur aussetzt als bei der vorangegangenen Gelierung. Dazu kann man beispielsweise ein Temperierbad oder einen Wärmeschrank verwenden oder die Vorrichtung oder Umgebung, in der sich das Gel befindet, in geeigneter Weise erwärmen.

Die Temperatur bei der Alterung kann in einem weiten Bereich variieren und ist an sich nicht kritisch. Im Allgemeinen altert man bei Temperaturen von 30°C bis 150°C, bevorzugt von 40°C bis 100°C. Die Alterungs-Temperatur sollte im Bereich von 10°C bis 100°C, insbesondere von 20°C bis 80°C über der Gelierungstemperatur liegen. Wurde bei Raumtemperatur geliert, so kann man insbesondere bei Temperaturen von 40°C bis 80°C, bevorzugt bei etwa 60°C altern. Der Druck bei der Alterung ist unkritisch und beträgt üblicherweise von 0,9 bis 5 bar (absolut).

Die Dauer der Alterung ist abhängig von der Art des Gels und kann wenige Minuten dauern, aber auch lange Zeit in Anspruch nehmen. Die Dauer der Alterung kann beispielsweise bis zu 30 Tagen betragen. Üblicherweise beträgt die Dauer der Alterung von 10 Minuten bis 12 Stunden, bevorzugt von 20 Minuten bis 6 Stunden und besonders bevorzugt von 30 Minuten bis 5 Stunden.

Je nach Art und Zusammensetzung kann das Gel während der Alterung geringfügig schrumpfen und sich dabei von der Wandung der Geliervorrichtung ablösen. Vorteilhaft deckt man das Gel während der Alterung ab bzw. verschließt die Geliervorrichtung, in der sich das Gel befindet.

Für das erfindungsgemäße Verfahren besonders geeignete organische Gelvorstufen (A) und deren Gelierungsreaktionen werden im folgenden beschrieben.

In einer bevorzugten Ausführungsform I der Schritte (a) und (b) des erfindungsgemäßen Verfahrens enthält die organische Gelvorstufe (A) mindestens eine phenolische Verbindung oder mindestens ein mehrfunktionelles Amin, insbesondere mindestens ein mehrfunktionelles Amin, sowie mindestens ein Aldehyd. In einer zweiten bevorzugten Ausführungsform II der Schritte (a) und (b) des erfindungsgemäßen Verfahrens ist die organische Gelvorstufe (A) auf Basis von Polyisocyanat aufgebaut.

Unter phenolischer Verbindung werden im Rahmen dieser Erfindung Verbindungen verstanden, die mindestens eine Hydroxylgruppen pro Molekül enthalten, die direkt mit einem aromatischen Ring verbunden sind. Folglich handelt es sich bei einer phenolischen Verbindung um einen Vertreter der Gruppe der Phenole. Unter mehrfunktionellen Aminen sind Verbindungen zu verstehen, die mindestens zwei reaktive Aminogruppen pro Molekül enthalten. Die phenolischen Verbindungen und die mehrfunktionellen Amine können jeweils noch weitere funktionelle Gruppen enthalten.

Die bevorzugten Ausführungsformen I und II werden im folgenden näher ausgeführt.

### Bevorzugte Ausführungsform I

Im Rahmen der bevorzugten Ausführungsform I enthält die organische Gelvorstufe (A) mindestens ein mehrfunktionelles Amin oder mindestens eine phenolische Verbindung sowie mindestens ein Aldehyd. Vorzugsweise ist die organische Gelvorstufe (A) auf Basis von mindestens einem mehrfunktionellen Amin oder mindestens einer phenolischen Verbindung sowie mindestens einem Aldehyd aufgebaut.

Als Gelvorstufe (A) kommen im Rahmen der bevorzugten Ausführungsform I insbesondere Polykondensations-Reaktivharze auf Basis von mehrfunktionellen Aminen und Aldehyden, sogenannte Amino-Aldehyd-Harze (Aminoplaste), und solche auf Basis von phenolischen Verbindungen und Aldehyden, sogenannte Phenol-Aldehyd-Harze (Phenoplaste) in Betracht. Die genannten Aminoplaste oder Phenoplaste können sowohl in niedermolekularer Form als auch in Form reaktiver Vorkondensate, erhalten durch Vorkondensation (Präpolymerisation) von niedermolekularen Einsatzstoffen, oder in Form von Mischungen aus den genannten Einsatzstoffen in niedermolekularer Form mit Vorkondensaten eingesetzt werden.

Die phenolischen Verbindungen sind in Bezug auf die Polykondensation mit einem Aldehyd im Allgemeinen mehrfunktionell, wobei sich mehrere Aldehydmoleküle an den mit mindestens einer Hydroxylgruppe substituierten aromatischen Ring anlagern können.

Die Polykondensations-Reaktivharze als organische Gelvorstufe (A) werden bevorzugt als Vorkondensaten, welche noch reaktive funktionelle Gruppen enthalten, oder als Mischungen aus Vorkondensaten und niedermolekularen phenolischen Verbindungen, mehrfunktionellen Aminen und/oder Aldehyden eingesetzt, wobei Vorkondensate als organische Gelvorstufe (A) besonders bevorzugt sind. Die als organische Gelvorstufe (A) eingesetzten Polykondensations-Reaktivharze sind in der Regel flüssig.

Weitläufig bekannte Beispiele für Polykondensations-Reaktivharze sind solche auf Basis von Aldehyden wie Formaldehyd oder Furfural und mehrfunktionellen Aminen oder phenolischen Verbindungen wie Harnstoff, Benzoguanamin, Resorcin, Catechol, Hydrochinon, Melamin, Phloroglucin, Anilin und Kresol.

Durch Gelierung des Polykondensations-Reaktivharzes, beispielsweise des Aminoplasts, wird in Verfahrensschritt (b) ein Gel erhalten. Im Rahmen dieser Erfindung sind somit unter Reaktivharzen, insbesondere Aminoplaste und Phenoplaste, niedermolekulare oder relativ niedermolekulare, präpolymerisierte Gelvorstufen zu verstehen, die in Schritt (b) des Verfahrens unter Bildung eines Gels weiter umgesetzt werden. Die Bezeichnung Reaktivharz, insbesondere ein Aminoplast bzw. ein Phenoplast, kennzeichnet somit eine vernetzbare Vorstufe und nicht das in Schritt (b) erhaltene vernetzte Polymer.

Die mehrfunktionellen Amine oder phenolischen Verbindungen und Aldehyde oder deren Vorkondensate können jeweils einzeln oder in Mischungen eingesetzt werden.

Vorzugsweise enthält die organische Gelvorstufe (A) im Rahmen der bevorzugten Ausführungsform I mindestens ein mehrfunktionelles Amin und mindestens ein Aldehyd. Eine solche Gelvorstufe wird im folgenden als Aminoplast bezeichnet. Besonders bevorzugt ist die organische Gelvorstufe (A) auf Basis von mindestens einem mehrfunktionellen Amin, insbesondere Melamin und mindestens einem Aldehyd, insbesondere Formaldehyd, aufgebaut. Ganz besonders bevorzugt enthält die organische Gelvorstufe (A) Melamin und Formaldehyd.

Als Gelvorstufe (A) geeignete Polykondensations-Reaktivharze können bezüglich ihres zahlenmittleren Molekulargewichtes in einem weiten Bereich variieren, z. B. in einem Bereich von 30 bis 20 000 g/mol. Bevorzugt sind die Polykondensations-Reaktivharze relativ niedermolekular, besonders bevorzugt mit einer Molmasse von bis zu 2000 g/mol, insbesondere von 200 bis 2000 g/mol.

Die als Gelvorstufe (A) eingesetzten Polykondensations-Reaktivharze sind bevorzugt flüssig und weisen eine Viskosität von weniger als 1 Pa·s auf, besonders bevorzugt weniger als 100 mPa·s.

Das Polykondensations-Reaktivharz kann als solches als organische Gelvorstufe (A) verwendet oder vor dem Einsatz derivatisiert werden, insbesondere durch Veretherung mit Alkoholen wie Methanol oder Ethanol.

Im Rahmen der bevorzugten Ausführungsform I eignen sich als Aldehyd insbesondere Formaldehyd oder Furfural. Als alternative Aldehyde können z.B. Acetaldehyd, Trimethylolacetaldehyd, Acrolein, Benzaldehyd, Glyoxal, Glutaraldehyd, Phthalaldehyd und Terephthalaldehyd eingesetzt werden. Formaldehyd und Furfural sind als Aldehyd besonders bevorzugt.

Als mehrfunktionelle Amine kommen insbesondere Harnstoff, Benzoguanamin, Melamin und Anilin in Betracht. Weitere geeignete Amine sind: alkyl- und arylsubstituiertes Melamin, Harnstoff, Urethane, Carbonsäureamide, Dicyandiamid, Guanidin, Sulfurylamid, Sulfonsäureamide, aliphatische Amine. Als mehrfunktionelle Amine in der Gelvorstufe (A) besonders bevorzugt sind Melamin und Harnstoff.

Als phenolische Verbindungen kommen zum Beispiel die verschiedenen Isomere des Kresols, Hydroxybenzol, die Dihydroxybenzole wie Resorcin, Brenzcatechin und Hydrochinon, sowie Phloroglucin in Betracht. Man kann auch Mischungen der genannten phenolischen Verbindungen einsetzen. Phloroglucin ist als phenolische Verbindung in der Gelvorstufe (A) im Rahmen der bevorzugten Ausführungsform I besonders bevorzugt.

Als Gelvorstufe (A) besonders bevorzugte Polykondensations-Reaktivharze auf Basis mindestens eines mehrfunktionellen Amins und mindestens eines Aldehyds sind solche aus Harnstoff, Benzoguanamin oder Melamin sowie Formaldehyd. Besonders bevorzugt sind Melamin-Formaldehyd-Harze, Harnstoff-Formaldehyd-Harze und Melamin/Harnstoff-Formaldehyd-Harze. Falls Phenoplaste zum Einsatz kommen, dann sind Phenol-Aldehyd-Harze aus Hydroxybenzol-Formaldehyd und Kresol-Formaldehyd besonders geeignet.

In einer besonders bevorzugten Ausführungsform wird im Rahmen des erfindungsgemäßen Verfahrens als organische Gelvorstufe (A) eine Gelvorstufe auf Basis von Melamin und Formaldehyd, ein sogenanntes Melamin/Formaldehyd-Reaktivharz, insbesondere in Form eines Präpolymers, eingesetzt.

Polykondensations-Reaktivharze auf Basis von Melamin und Formaldehyd können neben Melamin bis zu 50 Gew.-%, vorzugsweise bis 20 Gew.-% weiterer mehrfunktioneller Amine oder phenolische Verbindungen, und neben Formaldehyd bis zu 50 Gew.-%, vorzugsweise bis zu 20 Gew.-% weiterer Aldehyde, enthalten. Besonders bevorzugt ist jedoch ein Reaktivharz bestehend aus Melamin und Formaldehyd. Weitere Einzelheiten über Melamin/Formaldehyd-Kondensationsprodukte finden sich in Houben-Weyl, Methoden der organischen Chemie, Band 14/2, 1963, Seiten 319 bis 402.

Das Molverhältnis Melamin zu Formaldehyd gemäß der vorgenannten besonders bevorzugten Ausführungsform liegt in der Regel bei 1 : 1,3 bis 1 : 3,5, insbesondere 1 : 1,6 bis 1 : 3,1. Geeignete Melamin-Formaldehyd-Harze sind z.B. die unter dem Namen Kauramin® bekannten Melamin-Formaldehyd-Harze, die von BASF Aktiengesellschaft erhältlich sind.

Das Melamin-Formaldehyd-Reaktivharz liegt üblicherweise als Lösung oder Dispersion, bevorzugt als Lösung, vor. Das Melamin-Formaldehyd- Reaktivharz kann beispielsweise auch ein mit einem Alkohol verethertes Melamin-Formaldehyd- Reaktivharz mit einem Melamin/Formaldehyd-Verhältnis im Bereich von 1 : 1 bis 1 : 10, bevorzugt 1 : 2 bis 1 : 6, sein. Solche veretherten Reaktivharze sind bekannt und handelsüblich und werden beispielsweise von BASF Aktiengesellschaft unter dem Namen Luwipal® vertrieben, beispielsweise Luwipat® 063. Besonders bevorzugt wird als organische Gelvorstufe (A) jedoch ein nicht derivatisiertes Melamin-Formaldehyd-Harz eingesetzt.

Als organische Gelvorstufe (A) sind des Weiteren Polykondensations-Reaktivharze auf Basis von Harnstoff und Formaldehyd geeignet. Diese Reaktivharze sind ebenfalls bekannt und werden beispielsweise von der BASF Aktiengesellschaft unter dem Namen Kaurit® vertrieben.

Die Umsetzung der reaktiven Gelvorstufe (A) zu einem Gel ist prinzipiell bekannt. Die Zusammensetzung in Schritt (a) des erfindungsgemäßen Verfahrens enthält üblicherweise von 2 bis 30 Gew.-%, bevorzugt von 5 bis 25 Gew.-% und besonders bevorzugt von 10 bis 20 Gew.-% des Polykondensations-Reaktivharzes.

Die Wahl des Lösungsmittels (C) im Rahmen der bevorzugten Ausführungsform I richtet sich nach der organischen Gelvorstufe (A). In Betracht kommen alle Lösungsmittel, die eine gelierbare Zusammensetzung ergeben, also eine Gelbildung ermöglichen.

In einer bevorzugten Ausführungsform ist das Polykondensations-Reaktivharz wasserlöslich, wobei als Lösungsmittel (C) Wasser eingesetzt wird. Beispiele für die bevorzugten wasserlöslichen Polykondensations-Reaktivharze sind solche auf Basis nicht derivatisierter, insbesondere nicht veretherter, Amino-Aldehyd-Harze.

Falls als organische Gelvorstufe (A) veretherte Melamin-Formaldehyd-Reaktivharze oder andere derivatisierte Polykondensations-Reaktivharze eingesetzt werden, dann kommen als Lösungsmittel insbesondere Ether wie Tetrahydrofuran (THF) oder Ketone wie Methylethylketon (MEK) in Betracht.

Die Bereitstellung der Zusammensetzung gemäß Schritt (a) des erfindungsgemäßen Verfahrens erfolgt in an sich bekannter Weise. Je nach Löslichkeit des Polykondensations-Reaktivharzes erhält man die Zusammensetzung bereits durch Zusammengeben von Polykondensations-Reaktivharz und Lösungsmittel (C). Beispielsweise kann man die als Gelvorstufe (A) bevorzugten wasserlöslichen Melamin-Formaldehyd-Harze einfach bei Raumtemperatur (20°C) mit Wasser verdünnen. Bei geringerer Löslichkeit können Mischvorrichtungen erforderlich sein, beispielsweise Rührer, Hochgeschwindigkeitsrührer, Dispergatoren z.B. mit Rotor-Stator-System, oder Kolloidmühlen. Man kann die Zusammensetzung beispielsweise bei Raumtemperatur (20°C) oder darunter oder auch bei bis zu 100°C herstellen, je nach Löslichkeit des Polykondensations-Reaktivharzes.

Die Umsetzung der Gelvorstufe (A) zu einem Gel in Schritt b) des erfindungsgemäßen Verfahrens erfolgt im Rahmen der bevorzugten Ausführungsform I üblicherweise bei einer Temperatur von ungefähr 20°C bis ungefähr 80°C, insbesondere von 20°C bis 70°C. Vorzugsweise wird die Gelierung bei einer Temperatur von 50 bis 70°C durchgeführt.

Darüber hinaus können Katalysatoren als weitere Bestandteile (B) der Zusammensetzung zur Beschleunigung der Gelierung zugegeben werden. Dabei handelt es sich meist um Säuren, insbesondere Salzsäure, Phosphorsäure, Essigsäure, Ameisensäure, p-Toluolsulfonsäure, p-Dodecylbenzolsulfonsäure oder sonstige Säuren, die eine Weiterkondensation des Harzes katalysieren. Auch Salze wie Ammoniumchlorid, welche die Gelierung beschleunigen, kommen in Betracht.

Die geeignete Menge von Katalysator in der Zusammensetzung im Verhältnis zur organischen Gelvorstufe (A) kann in einem relativ breiten Bereich variieren und hängt in erster Linie von der Säurestärke der verwendeten Säure ab. Im Falle von Ameisensäure als Katalysator und einem Melamin-Formaldehyd-Harz als organische Gelvorstufe (A) ist ein Massenverhältnis Reaktivharz zu Säure von 1 bis 5 zu 1 bevorzugt, wobei ein Massenverhältnis von 1,2 bis 3 zu 1, insbesondere von 1,5 bis 2,5 zu 1 besonders bevorzugt ist.

### Bevorzugte Ausführungsform II

In einer weiteren bevorzugten Ausführungsform II wird in Schritt (a) des erfindungsgemäßen Verfahrens eine organische Gelvorstufe (A) auf Basis von Polyisocyanat eingesetzt. Die organische Gelvorstufe (A) dieser bevorzugten Ausführungsform II enthält als Komponente (a1) mindestens ein Polyisocyanat und als Komponente (a2) mindestens eine gegenüber Isocyanaten reaktive Verbindung.

Unter Polyisocyanat soll im Rahmen dieser Erfindung eine organische Verbindung verstanden werden, die mindestens zwei Isocyanatgruppen pro Molekül enthält.

Als gegenüber Isocyanaten reaktive Verbindungen in Komponente (a2) sind grundsätzlich solche geeignet, die über mindestens zwei gegenüber Isocyanaten reaktive Wasserstoffatome verfügen. Die geeigneten Verbindungen enthalten insbesondere Hydroxylgruppen und/oder primäre und/oder sekundäre Aminogruppen.

Die beiden Komponenten (a1) und (a2) weisen jeweils eine Funktionalität von mindestens zwei auf. Um in Schritt (b) ein geeignetes Gel zu erhalten, beträgt die Summe der Funktionalitäten der Komponenten (a1) und (a2) zudem mindestens 4,5 und bevorzugt mindestens 5, insbesondere von 5 bis 10.

Unter Funktionalität einer Verbindung soll im Rahmen der vorliegenden Erfindung die Zahl der reaktiven Gruppen pro Molekül verstanden werden. Dabei spiegelt die Funktionalität im Fall der Komponente (a1) die Anzahl an Isocyanatgruppen pro Molekül und im Fall der Komponente (a2) die Anzahl von gegenüber Isocyanaten reaktiven Gruppen pro Molekül wider.

Falls als Komponente (a1) oder (a2) Mischungen aus Verbindungen mit unterschiedlicher Funktionalität zum Einsatz kommen, ergibt sich die Funktionalität aus dem zahlengewichteten Mittel der Funktionalität der einzelnen Verbindungen. Falls es sich bei den reaktiven Gruppen um OH-Gruppen handelt, dann wird die Funktionalität mit OH-Funktionalität bezeichnet. Im Falle von Aminogruppen bezeichnet die Funktionalität die Summe aus der Zahl der primären und der Zahl der sekundären Aminogruppen pro Molekül.

In einer bevorzugten Ausführungsform beträgt die Funktionalität der Komponente (a1) mindestens 2,5 und insbesondere von 3 bis 5. In diesem Fall beträgt die Funktionalität der Komponente (a2) mindestens 2, insbesondere von 2,5 bis 8.

In einer anderen bevorzugten Ausführungsform beträgt die Funktionalität der Komponente (a1) ungefähr 2. In diesem Fall beträgt die Funktionalität der Komponente (a2) bevorzugt mindestens 3, insbesondere in einer spezifischen bevorzugten Ausführungsform von 3 bis 10 oder in einer weiteren spezifischen bevorzugten Ausführungsform von mehr als 10 bis 100, beispielsweise von 30 bis 100.

Die jeweiligen Ausführungsformen werden weiter unten näher erläutert.

Optional enthält die im Rahmen der Ausführungsform II in Schritt (a) bereitgestellte Zusammensetzung als weitere Komponente (B) noch mindestens einen Katalysator (b1), welcher die Umsetzung zwischen den Komponenten (a1) und (a2) katalysiert. Durch Umsetzung dieser beiden Komponenten (a1) und (a2), optional katalysiert durch einen Katalysator (b1), entsteht in Schritt (b) des erfindungsgemäßen Verfahrens ein Gel. Geeignete Katalysatoren (b1) werden weiter unten bei der Herstellung der Gele unter Ausführungsform II beschrieben.

Die Bildung eines Gels durch Umsetzung der Komponenten (a1) und (a2) erfolgt vornehmlich durch Bildung von Harnstoff-, Urethan- oder Isocyanuratgruppen oder durch Bildung von 2 oder 3 der vorgenannten Gruppen. Die Bildung von Isocyanuraten wird üblicherweise durch Trimerisationskatalysatoren katalysiert. Als solche Trimerisationskatalysatoren können zum Beispiel dem Fachmann weitläufig bekannte, zum Beispiel die weiter unten ausgeführten, eingesetzt werden.

Die Bildung von Urethangruppen erfolgt üblicherweise katalysiert durch sogenannte Urethankatalysatoren. Derartige Urethankatalysatoren sind dem Fachmann ebenfalls weitläufig bekannt. Urethankatalysatoren für Gebrauch in der vorliegenden Erfindung schließen allgemein bekannte Katalysatoren ein, welche die Urethan- und/oder Harnstoffreaktion fördern. Derartige Urethankatalysatoren werden weiter unten ausgeführt.

Die Einsatzmengen der Komponenten (a1) und (a2) werden im Rahmen der bevorzugten Ausführungsform II bevorzugt so gewählt, dass nach erfolgter Umsetzung zu einem Gel zu Beginn des Schrittes (c) des erfindungsgemäßen Verfahrens noch reaktive Gruppen, insbesondere Isocyanatgruppen, Hydroxylgruppen oder Aminogruppen, in nicht umgesetzter Form im Gel verbleiben.

Bevorzugt enthält die organische Gelvorstufe (A) im Rahmen der bevorzugten Ausführungsform II die Komponenten (a1) und (a2) in einem nicht-stöchiometrischen Verhältnis der reaktiven funktionellen Gruppen, so dass zu Beginn des Schrittes (c) des erfindungsgemäßen Verfahrens die reaktiven funktionellen Gruppen einer der beiden Komponenten (a1) oder (a2) im molaren Überschuss relativ zu den reaktiven funktionellen Gruppen der jeweils anderen Komponente in nicht umgesetzter Form vorliegen.

Besonders bevorzugt beträgt der molare Überschuss an reaktiven funktionellen Gruppen einer der beiden Komponenten (a1) oder (a2) in der organischen Gelvorstufe (A) relativ zu den reaktiven funktionellen Gruppen der jeweils anderen Komponente mindestens 5 mol-%, vorzugsweise von 5 bis 15 mol-%, insbesondere von 6 bis 12 mol-%. Der Überschuss der reaktiven Gruppen in der jeweils einen Komponente wird nach oben durch praktische Erwägungen begrenzt, da sich in Schritt (b) des erfindungsgemäßen Verfahrens ein Gel bilden muss.

In einer besonders bevorzugten Ausführungsform wird Komponente (a1) im Verhältnis zu Komponente (a2) derart eingesetzt wird, dass der Überschuss an Isocyanatgruppen in der Gelvorstufe (A) mindestens 5 mol-%, insbesondere von 5 bis 15 mol-%, besonders bevorzugt von 6 bis 12 mol-%, beträgt.

In einer weiteren besonders bevorzugten Ausführungsform wird Komponente (a1) im Verhältnis zu Komponente (a2) derart eingesetzt, dass der Überschuss an gegenüber Isocyanatgruppen reaktiven Gruppen der Komponente (a2) in der Gelvorstufe (A) mindestens 5 mol-%, insbesondere von 5 bis 15 mol-%, besonders bevorzugt von 6 bis 12 mol-%, beträgt.

### Polyisocyanate (a1)

Gemäß bevorzugter Ausführungsform II enthält die organische Gelvorstufe (A) mindestens ein Polyisocyanat als Komponente (a1). Als Polyisocyanate können aromatische, aliphatische, cycloaliphatische und/oder araliphatische Isocyanate in monomerer oder oligomerer Form oder als Präpolymer eingesetzt werden.

Derartige Polyisocyanate sind an sich bekannt oder können nach an sich bekannten Methoden hergestellt werden. Die Polyisocyanate können als Mischungen eingesetzt werden, so dass Komponente (a1) in diesem Fall verschiedene Polyisocyanate enthält. Als Bestandteil der Komponente (a1) in Betracht kommende Polyisocyanate weisen zwei (im folgenden Diisocyanate genannt) oder mehr als zwei Isocyanatgruppen pro Molekül auf.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylendiisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-isocyanatomethyl-cyclohexan (isophoron-diisocyanat, IPDI), 1,4-und/oder 1,3-Bis(isocyanatomethyl)cyclohexan (HXDI), 1,4-Cyclohexandiisocyanat, 1-Methyl-2,4- und/oder -2,6-cyclohexandüsocyanat und/oder 4,4'-, 2,4'- und 2,2'-Dicyclohexylmethandiisocyanat.

Als Polyisocyanate der Komponente (a1) sind aromatische Isocyanate bevorzugt. Insbesondere sind in Betracht kommende aromatische Polyisocyanate:
- Polyisocyanate auf Basis von Toluylendiisocyanat (TDI), insbesondere 2,4-TDI oder 2,6-TDI oder Mischungen aus 2,4- und 2,6-TDI;
- Polyisocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder 3 der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
- 1,5-Naphthylendiisocyanat (NDI);
- Paraphenylendiisocyanat (PPDI)
- Gemische aus zwei oder mehreren der vorgenannten aromatischen Polyisocyanate.

Als Polyisocyanate sind im Rahmen der bevorzugten Ausführungsform II insbesondere sogenannte oligomere Polyisocyanate geeignet. Besonders bevorzugt enthält die Komponente (a1) oligomeres Diphenylmethandiisocyanat (oligomeres MDI). Die Polyisocyanate können auch aus Mischungen von monomeren aromatischen Diisocyanaten und oligomerem MDI aufgebaut sein.

Oligomeres MDI enthält ein oder mehrere mehrkernige Kondensationsprodukte des MDI mit einer Funktionalität von mehr als 2, insbesondere 3 oder 4 oder 5. Oligomeres MDI ist bekannt und wird häufig als Polyphenylpolymethylenlsocyanat bezeichnet. Oligomeres MDI ist üblicherweise aus einer Mischung aus MDI-basierten Isocyanaten mit unterschiedlicher Funktionalität aufgebaut. Üblicherweise wird oligomeres MDI im Gemisch mit monomerem MDI eingesetzt.

Die (mittlere) Funktionalität der Komponente (a1), welche oligomeres MDI enthält, kann im Bereich von ungefähr 2,3 bis ungefähr 5 variieren, vorzugsweise von 2,5 bis 3,5, insbesondere von 2,5 bis 3. Eine solche Mischung von MDI-basierten Polyisocyanaten mit unterschiedlichen Funktionalitäten ist insbesondere das Roh-MDI, das bei der Herstellung von MDI anfällt.

Polyisocyanate oder Mischungen mehrerer Polyisocyanate auf Basis von MDI sind bekannt und werden beispielsweise von Elastogran GmbH unter dem Namen Lupranat® vertrieben.

Als Bestandteil der Komponente (a1) kommen auch weiter umgesetzte Polyisocyanate in Betracht, d.h. Produkte, die durch chemische Umsetzung der oben beschriebenen Polyisocyanate erhalten werden. Beispielhaft genannt seien Ester-, Harnstoff-, Biuret-, Allophanat-, Carbodiimid-, Isocyanurat-, Uretdion- und/oder Urethangruppen enthaltende Polyisocyanate.

Im einzelnen kommen beispielsweise in Betracht:
- Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht;
- Mit niedermolekularen Diolen, Triolen, Dialkylenglykolen, Trialkylenglykolen oder Polyoxalkylenglykolen mit Molekulargewichten bis 6000 g/mol, insbesondere mit Molekulargewichten bis 1500 g/mol, modifiziertes 4,4'-Diphenylmethandiisocyanat, modifizierte 4,4'- und 2,4'-Diphenylmethandiisocyanatmischungen, oder modifiziertes Roh-MDI oder 2,4- bzw. 2,6-Toluylendiisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylenpolyoxyethylen-glykole, -triole und/oder -tetrole;
- Isocyanat-Gruppen enthaltende Präpolymere mit NCO-Gehalten von 25 bis 3,5 Gew.-%, vorzugsweise von 21 bis 14 Gew.-%, bezogen auf das Gesamtgewicht, hergestellt aus Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Mischungen aus den Isomeren des monomeren MDI und polymerem MDI, insbesondere Roh-MDI;
- Flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethandiisocyanat und/oder 2,4- und/oder 2,6-Toluylendiisocyanat;
- Aus aromatischen Polyisocyanaten, insbesondere MDI, TDI, NDI und/oder PPDI, durch Umsetzung mit tri- und höherfunktionellen Alkoholen erhältliche Polyisocyanate mit einer Funktionalität von mindestens 3;
- Die durch Trimerisierung von aromatischen Polyisocyanaten, insbesondere TDI und/oder PPDI, erhältlichen trifunktionellen Polyisocyante, insbesondere das aus TDI durch Umsetzung mit trifunktionellen Alkoholen erhältliche Polyisocyanat.

Die modifizierten Polyisocyanate können miteinander oder im Gemisch mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat eingesetzt werden.

Als Komponente (a1) kommen außerdem Präpolymere mit einem zahlenmittleren Molekulargewicht bis zu 20 000 g/mol in Frage, die im Mittel mindestens zwei Isocyanatgruppen pro Molekül enthalten, und die durch eine nicht-stöchiometrische Vorabumsetzung der weiter oben beschriebenen aromatischen und/oder aliphatischen Polyisocyanate mit der weiter unten beschriebenen Komponente (a2) herstellbar sind, so dass im Mittel mindestens zwei Isocyanatgruppen im Molekül verbleiben. Bevorzugt sind dabei jedoch Präpolymere mit einem zahlenmittleren Molekulargewicht bis zu 20 000 g/mol, die im Mittel mehr als zwei Isocyanatgruppen pro Molekül enthalten, insbesondere im Mittel von 3 bis 10 Isocyanatgruppen pro Molekül.

### Gegenüber Isocyanaten reaktive Verbindungen (a2)

Als gegenüber Isocyanaten reaktive Verbindungen der Komponente (a2) sind insbesondere Polyole mit einer Funktionalität von 2 bis 10, phenolische Verbindungen mit einer Funktionalität von mindestens 2, hyperverzweigte Hydroxy- oder Aminoverbindungen oder mehrfunktionelle aromatische Amine geeignet. Diese bevorzugten Verbindungen werden im folgenden näher erläutert.

### α) Aliphatische Polyole mit einer Funktionalität von 2 bis 10

Als gegenüber Isocyanaten reaktive Verbindungen der Komponente (a2) kommen beispielsweise Polyetherpolyalkohole, Polyesterpolyalkohole, Polyetherpolyesteralkohole, Polythioetherpolyole, hydroxylgruppenhaltigen Polyacetale und hydroxylgruppenhaltigen aliphatische Polycarbonate oder Mischungen aus mindestens zwei der vorgenannten aliphatischen Polyole in Betracht, wobei die in Frage kommenden aliphatische Polyole eine OH-Funktionalität von 2 bis 10 aufweisen.

Unter einem aliphatischen Polyol ist somit eine Verbindung zu verstehen, die pro Molekül mindestens zwei gegenüber Isocyanatgruppen reaktive Wasserstoffatome in Form von Hydroxylgruppen enthält, die nicht direkt an einen aromatischen Kern gebunden sind, das heißt, nicht-phenolische Hydroxylgruppen.

Als geeignete aliphatische Polyole in Komponente (a2) können beispielsweise Ether und/oder Ester und/oder Verbindungen, die Ester und Etherstrukturen enthalten zum Einsatz kommen. Derartige Verbindungen sind an sich bekannt oder können durch an sich bekannte Verfahren der Veresterung und/oder Alkoxylierung hergestellt werden.

Die Hydroxylzahl der Komponente (a2) beträgt bei den unter a) genannten aliphatischen Polyolen bevorzugt von 50 bis 3000 mg KOH/g, besonders bevorzugt von 100 bis 2000 mg KOH/g, ganz besonders bevorzugt von 300 bis 1500 mg KOH/g.

Die Hydroxylzahl einer Verbindung gibt an, welche Menge an Kaliumhydroxid in Milligramm der von 1 g der Verbindung bei der Acetylierung gebundenen Essigsäure äquivalent ist. Die Hydroxylzahl ist ein Maß für die Konzentration von Hydroxylgruppen in einer Polymerkette. Die Bestimmung der Hydroxylzahl ist in der DIN 53240 beschrieben, auf die sich die in dieser Anmeldung angegebenen Hydroxylzahlen beziehen. Ein Polyol kann neben seiner Hydroxylzahl auch durch sein Molekulargewicht charakterisiert werden. Wie dem Fachmann hinlänglich bekannt, ist eine exakte Umrechnung von Molekulargewicht in Hydroxylzahl lediglich bei bekannter Funktionalität möglich.

Polyetherole mit den vorgenannten Eigenschaften können mittels an sich bekannter Verfahren hergestellt werden, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 10 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden, ausgewählt aus Propylenoxid (PO) und Ethylenoxid (EO).

Falls unterschiedliche Alkylenoxide in ein Polyetherol der Komponente (a2) eingebaut werden, können diese einzeln, alternierend nacheinander oder als Mischungen verwendet werden. Der Einsatz eines EO/PO-Gemisches führt zu einem Polyetherol mit statistischer PO/EO-Einheiten-Verteilung. Es ist möglich, zunächst ein PO/EO-Gemisch einzusetzen und dann vor Abbruch der Polymerisation nur noch PO oder EO zu verwenden, um ein Polyetherpolyol mit PO- bzw. EO-Endcap zu erhalten.

Als Startermoleküle zur Herstellung der Polyetherole kommen beispielsweise in Betracht: Wasser, organische Dicarbonsäuren, Diamine, wie z.B. gegebenenfalls mono- und dialkylsubstituiertes Ethylendiamin, Diethylentriamin, Triethylentetramin, 1,3-Propylendiamin, und/oder 1,3- bzw. 1,4-Butylendiamin. Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin und Trialkanolamine wie z.B. Triethanolamin und Ammoniak. Weiterhin können als Startermoleküle zwei-, drei- oder vierwertige Alkohole, wie Ethandiol, Propandiol-1,2 und -1,3, Diethylenglykol, Dipropylenglykol, Butandiol-1,4, Hexandiol-1,6, Glycerin und/oder Pentaerythrit eingesetzt werden.

Alternativ können als Startermoleküle allgemein bekannte aliphatische, araliphatische, aromatische und/oder cycloaliphatische Verbindungen mit einem Molekulargewicht von 50 bis 500 g/mol und einer Funktionalität von 2 bis 10 eingesetzt werden, insbesondere aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxycyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen.

Die Komponente (a2) kann eines oder mehrere der vorgenannten Polyole enthalten.

### β) Phenolische Verbindungen mit einer Funktionalität von mindestens 2

Außerdem kommen als gegenüber Isocyanaten reaktive Verbindungen in Komponente (a2) phenolische Verbindungen in Betracht, die mindestens zwei, bevorzugt von zwei bis drei, insbesondere drei Hydroxylgruppen pro Molekül aufweisen.

Geeignete phenolische Verbindungen mit mindestens zwei Hydroxylgruppen sind insbesondere Derivate des Benzendiols, wie zum Beispiel Catechol (1,2-Dihydroxybenzol), Resorcin (1,3-Dihydroxybenzol), Hydrochinon (1,4-Dihydroxybenzol), oder Orcin (3,5-Dihydroxytoluol). Weiterhin sind phenolische Verbindungen mit mindestens zwei Benzolringen, insbesondere Derivate des Bisphenyls, beispielsweise 4,4'-Biphenol, oder Bisphenol-A geeignet.

Darüber hinaus kommen phenolische Verbindungen mit einer OH-Funktionalität von drei in Betracht, insbesondere Pyrogallol und insbesondere Phloroglucin. Schließlich kommen auch phenolische Verbindungen mit einer Funktionalität von mehr als drei in Betracht, beispielsweise Polyphenole. Im Prinzip können die phenolischen Verbindungen noch weitere gegenüber Isocyanaten reaktive funktionelle Gruppen enthalten, beispielsweise Aminogruppen im Fall der Catechole.

Die phenolischen Verbindungen können einzeln oder im Gemisch mehrerer der oben genannten Verbindungen eingesetzt werden.

Im Rahmen der unter b) diskutierten Ausführungsform ist es bevorzugt, wenn die Komponente (a2) auf Basis von phenolischen Verbindungen mit einer rein phenolischen OH-Funktionalität von 2 bis 3 aufgebaut ist, das heißt es sind keine aliphatischen OH-Gruppen vorhanden.

Als phenolische Verbindung besonders bevorzugt sind solche mit einer OH-Funktionalität von drei, insbesondere Phloroglucin. Kommt in Komponente (a2) eine phenolische Verbindung mit zwei Hydroxylgruppen zum Einsatz, dann ist Resorcin bevorzugt.

In einer ganz besonders bevorzugten Ausführungsform ist die Komponente (a2) auf Basis von Phloroglucin aufgebaut.

### γ) Hyperverzweigte Verbindungen

Als Komponente (a2) können außerdem sogenannte hyperverzweigte Verbindungen eingesetzt werden. Eine gegenüber Isocyanaten reaktive hyperverzweigte Verbindung hat eine Funktionalität von mehr als 10, insbesondere von 30 bis 100. Die hyperverzweigten Verbindungen können als gegenüber Isocyanaten reaktive Gruppen Hydroxylgruppen oder Aminogruppen oder Mischungen aus Hydroxylgruppen und Aminogruppen enthalten, wobei Hydroxylgruppen als gegenüber Isocyanaten reaktive Gruppen bevorzugt sind. Sofern Komponente (a2) eine hyperverzweigte Verbindung enthält, dann hat die hyperverzweigte Verbindung bevorzugt eine OH-Funktionalität von 20 bis 100.

Unter "hyperverzweigt" wird im Zusammenhang mit der vorliegenden Erfindung verstanden, dass der Verzweigungsgrad (degree of branching, DB) von 20 bis 99,9 %, bevorzugt von 30 bis 95 %, besonders bevorzugt von 50 bis 90 % beträgt. Der Verzeigungsgrad (DB) ist definiert durch DB = (T + Z) / (T + Z + L) wobei T die Zahl der terminalen Monomereinheiten, Z die Zahl der verzweigten Monomereinheiten und L die Zahl der linearen Monomereinheiten pro Molekül ist. Im Falle von Mischungen aus unterschiedlichen Molekülen wird unter dem Verzweigungsgrad das zahlengewichtete Mittel verstanden.

Zur Definition des Verzweigungsgrades siehe H. Frey et al., Acta Polym. 1997, 48, 30. Die Glastemperatur beträgt vorzugsweise von -50°C bis 140°C und insbesondere von -50°C bis 100°C (mittels DSC, gemessen nach DIN 53765). Bezüglich hyperverzweigter Polymere wird auch auf H. Frey et al., Chem. Eur. J. 2000, 6, No. 14, 2499 verwiesen. Die Herstellung hyperverzweigter Polyalkohole ist beispielsweise in EP-A 1 501 882 und EP-A 1 537 166 beschrieben.

Besonders geeignet als gegenüber Isocyanaten reaktive Verbindungen sind stark verzweigte, Estergruppen enthaltende Polyole. Derartige hyperverzweigte Polyesterole sind zum Beispiel die aus 2,2 Dimethylolpropionsäure (Bis-MPA) erhältlichen Kondensationsprodukte, die Perstorp AB unter den Marken Boltorn® vertreibt, z.B. Boltorn® H20, H30 und H40.

Die gegenüber Isocyanaten reaktiven hyperverzweigten Verbindungen weisen bevorzugt eine Hydroxylzahl von mindestens 100 mg KOH/g auf, besonders bevorzugt von 150 mg KOH/g bis 550 mg KOH/g.

### δ) Aromatische Amine

Als gegenüber Isocyanaten reaktive Verbindungen können im Rahmen der bevorzugten Ausführungsform II als Komponente (a2) aromatische Amine mit einer Funktionalität von mindestens 2 eingesetzt werden, bevorzugt aromatische Diamine mit einer Funktionalität von 2. Unter aromatischem Amin ist eine Verbindung zu verstehen, in der mindestens eine Aminogruppe direkt an einen aromatischen Ring gebunden ist.

Als Komponente (a2) geeignet sind insbesondere aromatische Diamine mit primären Aminogruppen (primäre aromatische Diamine), die bei Raumtemperatur flüssig und mit der Komponente (a1) unter den Verarbeitungsbedingungen ganz oder zumindest teilweise mischbar sind.

Als aromatische Amine mit einer Funktionalität von mindestens zwei können an den aromatischen Kernen ansonsten unsubstituierte primäre aromatische Diamine eingesetzt werden. Geeignet sind jedoch auch substituierte primäre aromatische Diamine, insbesondere monoalkylsubstituierte primäre aromatische Diamine, bei denen die Reaktivität der Aminogruppen durch den Substituenten nicht negativ beeinflusst wird. Alkylsubstituierte aromatische Diamine sind üblicherweise im Vergleich zu den nicht alkylsubstituierten aromatischen Diaminen weniger giftig und daher bevorzugt.

Die aromatischen Amine, bevorzugt Diamine, können einzeln oder in Form von Mischungen eingesetzt werden.

Als primäre aromatische Diamine können beispielsweise auch solche verwendet werden, deren primäre Aminogruppen durch mindestens einen orthoständigen Alkylsubstituenten zu jeder Aminogruppe sterisch behindert sind.

In Betracht kommen auch Mischungen aus 99,9 bis 50 Gew.-%, vorzugsweise 75 bis 60 Gew.-% mindestens eines der oben genannten, primären aromatischen Diamine, dessen Aminogruppen gegenüber Polyisocyanaten durch mindestens einen orthoständigen Alkylsubstituenten zu jeder Aminogruppe sterisch behindert sind und 0,1 bis 50 Gew.-%, vorzugsweise 25 bis 40 Gew.-% mindestens eines unsubstituierten oder substituierten primären aromatischen Diamins, dessen Aminogruppen gegenüber Polyisocyanaten keine durch elektronenanziehende Substituenten und/oder sterische Hinderung verursachte verminderte Reaktivität zeigen, wobei die Gew.-% bezogen sind auf das Gesamtgewicht der Mischung aus Diaminen.

Als aromatische Diamine mit primären Aminogruppen kommen außerdem alkylsubstituierte 1,3-Phenylendiamine mit drei Alkylsubstituenten R¹, R² und R³ in Betracht, in denen R¹ ein Wasserstoffatom oder ein linearer oder verzweigter Alkylrest mit 1 bis 12 Kohlenstoffatomen, vorzugsweise 1 bis 6 Kohlenstoffatomen ist und R² und R³ gleiche oder verschiedene, lineare oder verzweigte Alkylreste mit 1 bis 4 Kohlenstoffatomen, wie z.B. ein Methyl-, Ethyl-, Propyl-, Isopropyl, Butyl- oder sek. Butylrest sind und die Substituenten R¹, R² beziehungsweise R³ in 6-, 2- beziehungsweise 4-Stellung und/oder in 2-, 6- beziehungsweise 4-Stellung des 1,3-Phenylendiamin-Rings vorliegen.

Geeignet sind beispielsweise solche Alkylreste R¹, bei denen die Verzweigungsstelle am C1-Kohlenstoffatom sitzt. Neben Wasserstoff seien als Alkylreste R¹ beispielhaft genannt der Methyl-, Ethyl-, n- und iso-Propyl-, Butyl-, Hexyl-, Octyl-, Decyl-, 1-Methyloctyl-, 2-Ethyloctyl-, 1-Methylhexyl-, 1,1-Dimethylpentyl-, 1,3,3-Trimethylhexyl, 1-Ethylpentyl-, 2-Ethylpentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propylrest.

Als alkylsubstituierte 1,3-Phenylendiamine seien insbesondere genannt: 2,4-Dimethyl, 2,4-Diethyl-, 2,4-Diisopropyl-, 2,4-Diethyl-6-methyl-, 2-Methyl-4,6-diethyl-, 2,4,6-Triethyl-, 2,4-Dimethyl-6-cyclohexyl-, 2-Cyclohexyl-4,6-diethyl-, 2-Cyclohexyl-2,6-düsopropyl-, 2,4-Dimethyl-6-(1-ethyl-n-propyl)-, 2,4-Dimethyl-6-(1,1-dimethyl-n-propyl)- und 2-(1-Methyl-n-butyl)-4,6-dimethyl-1,3-phenylendiamin.

Als aromatische Diamine kommen ferner alkylsubstituierte Diaminodiphenylmethane, wie z.B. 3,3'-di- und 3,3',5,5'-tetra-n-alkylsubstituierte 4,4'-Diaminodiphenylmethane wie z.B. 3,3'-Diethyl-, 3,3',5,5'-Tetraethyl- und 3,3',5,5'-Tetra-n-propyl-4,4'-diaminodiphenylmethan in Betracht.

Beispielsweise kommen 4,4'-Diaminodiphenylmethane mit 4 Alkylsubstituenten R⁴, R⁵, R⁶ und R⁷ in Betracht, wobei R⁴, R⁵, R⁶ und R⁷ gleich oder verschieden sind und einen Methyl-, Ethyl-, Propyl, Isopropyl-, sek.-Butyl- und tert.-Butylrest bedeuten, wobei jedoch mindestens einer der Reste ein Isopropyl- oder sek.-Butylrest sein muss und die Alkylsubstituenten R⁴, R⁵, R⁶ beziehungsweise R⁷ in 3-, 5-, 3'- beziehungsweise 5'-Stellung vorliegen.

Die alkylsubstituierten 4,4'-Diaminodiphenylmethane können auch im Gemisch mit Isomeren verwendet werden, in denen R⁴ in 4-Stellung, R⁵ in 2-Stellung, R⁶ in 3'-Stellung, R⁷ in 5'-Stellung und NH₂ in 3- und 4'-Stellung und/oder im Gemisch mit Isomeren, in denen R⁴ in 4-Stellung, R⁵ in 2-Stellung, R⁶ in 4'-Stellung, R⁷ in 2'-Stellung, NH₂ in 3- und 3'-Stellung vorliegen, wobei R⁴, R⁵, R⁶ und R⁷ die oben genannte Bedeutung haben.

Beispielhaft genannt seien: 3,3',5-Trimethyl-5'-isopropyl-, 3,3',5-Triethyl-5'-isopropyl-, 3,3',5-Trimethyl-5'-sek.-butyl-, 3,3',5-Triethyl-5'-sek.-butyl-4,4'-diaminodiphenylmethan, 3,3'-Dimethyl-5,5'-diisopropyl-, 3,3'-Diethyl-5,5'-di-sek.-butyl-, 3,3'-Diethyl-5,5'-di-sek.-butyl-, 3,5-Dimethyl-3',5'-diisopropyl-, 3,5-Diethyl-3',5'-diisopropyl-, 3,5-Dimethyl-3',5'-di-sek.-butyl-, 3,5-Diethyl-3',5'-di-sek.-butyl-4,4'-diaminodiphenylmethan, 3-Methyl-3',5,5'-triisopropyl-, 3-Ethyl-3',5,5'-triisopropyl-, 3-Methyl-3',5,5'-tri-sek.-butyl-, 3-Ethyl-3',5,5' -tri-sek.-butyl-4,4'-diaminodiphenylmethan, 3,3'-Diisopropyl-5,5'-di-sek.-butyl-, 3,5-Diisopropyl-3',5'-di-sek.-butyl-, 3-Ethyl-5-sek.-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3',5,5' -Tetraisopropyl- und 3,3',5,5' -Tetra-sek.-butyl-4,4'-diaminodiphenylmethan.

Die primären aromatischen Diamine können einzeln oder in Form von Mischungen, beispielsweise Mischungen aus alkylsubstituierten 1,3-Phenylendiaminen, 3,3'-di- und/oder 3,3',5,5'-tetraalkylsubstituierten 4,4'-Diaminodiphenylmethanen eingesetzt werden.

Außerdem können die primären aromatischen Diamine mit maximal 50 Gew.-%, bezogen auf das Gesamtgewicht, alkylsubstituierten primären aromatischen Tri- bis Pentaminen, wie z.B. Polyphenyl-polymethylen-polyaminen gemischt sein, wobei die aromatischen Polyamine mindestens in einer ortho-Stellung zu den Aminogruppen mit einem Alkylrest substituiert sind.

Im Rahmen der vorgenannten aromatischen Diamine bevorzugt verwendet werden folgende primäre aromatischen Diamine: m- und/oder p-Xylylendiamin, m- oder p-Pheny-lendiamin, Toluylen-2,4 oder 2,6-diamin, 2,4-Diethyl-, 2,4-Dimethyl-1,3-phenylendi-amin, 2,4-Diethyl-6-methyl-, 2-Methyl-4,6-diethyl-1,3-phenylendiamin, 2,4,6-Triethyl-1,3-phenylendiamin, 2,4-Dimethyl-6-tert.-butyl-, 2,4-Dimethyl-6-isooctyl- und 2,4-Dimethyl-6-cyclohexyl-1,3-phenylendiamin, 3,5-Dimethyl-3',5'-diisopropyl-4,4'-diaminodiphenylmethan und 3,3',5,5' -Tetraisopropyl-4,4'-diaminodiphenylmethan, 1,2-, 1,3- und 1,4-Phenylendiamin, Benzidin, 4,4'- und 2,4'-Diaminodiphenylmethan, 4,4'-Diaminodiphenylether, 1,5-Diamino-naphthalin, 1,8-Diaminonaphthalin, 3,4-, 2,4- und 2,6-Toluylendiamin sowie 4,4'- und 2,4'-Diaminodiphenylsulfon.

Besonders bevorzugt enthält die Komponente (a2) im Rahmen der spezifischen bevorzugten Ausführungsform II-δ mindestens ein aromatisches Amin ausgewählt aus 4,4'-Diaminodiphenylmethan, 2,4'-Diaminodiphenylmethan, 2,2'-Diaminodiphenylmethan und oligomerem Diaminodiphenylmethan.

Oligomeres Diaminodiphenylmethan enthält ein oder mehrere mehrkernige Methylenverbrückte Kondensationsprodukte von Anilin und Formaldehyd. Oligomeres MDA enthält mindestens ein, im Allgemeinen jedoch mehrere Oligomere des MDA mit einer Funktionalität von mehr als 2, insbesondere 3 oder 4 oder 5. Oligomeres MDA ist bekannt oder kann nach an sich bekannten Methoden hergestellt werden. Üblicherweise wird oligomeres MDA in Form von Mischungen mit monomerem MDA eingesetzt.

Die (mittlere) Funktionalität eines aromatischen Amins, welches oligomeres MDA enthält, kann im Bereich von ungefähr 2,3 bis ungefähr 5 variieren, vorzugsweise von 2,5 bis 3,5 und insbesondere von 2,5 bis 3. Eine solche Mischung von MDA-basierten aromatischen Aminen mit unterschiedlichen Funktionalitäten ist insbesondere das Roh-MDA, das bei der Kondensation von Anilin mit Formaldehyd, üblicherweise katalysiert durch Salzsäure, als Zwischenprodukt der Herstellung von Roh-MDI entsteht.

Besonders bevorzugt enthält die Komponente (a2) im Rahmen der spezifischen bevorzugten Ausführungsform II-δ oligomeres Diaminodiphenylmethan und weist eine Funktionalität von mindestens 2,5 auf, vorzugsweise von 2,5 bis 3,5 und insbesondere von 2,5 bis 3.

Außer den bevorzugten aromatischen Diaminen kommen auch aromatische Triamine einzeln oder als Gemisch mit aromatischen Diaminen in Betracht. Geeignete aromatische Triamine sind beispielsweise Triaminomesitylen und 2,4,6-Triaminoxylol.

Es ist dem Fachmann bekannt, dass aromatische Amine, beispielsweise Diamine, entstehen, wenn man aromatische Isocyanate, beispielsweise Diisocyanate, mit Wasser umsetzt. Demzufolge ist es möglich, an Stelle von mehrfunktionellen aromatischen Aminen entsprechende aromatische Polyisocyanate und eine äquivalente Menge an Wasser als Komponente (a2) einzusetzen, so dass die gewünschte Menge an mehrfunktionellem aromatischem Amin in situ oder in einer Vorabumsetzung entsteht. Bei einem Überschuss der Komponente (a1) und gleichzeitiger Zugabe von Wasser kann die Komponente (a1) in situ anteilmäßig zur Komponente (a2) umgesetzt werden, welche dann anschließend mit der verbleibenden Komponente (a1) unter Bildung von Harnstoff-Verknüpfungen reagiert. Diese Variante soll ausdrücklich von der vorliegenden Erfindung umfasst werden. Vorzugsweise erfolgt jedoch das Bereitstellen der Gelvorstufe (A) aus den Komponenten (a1) und (a2) gemäß Schritt (a) des erfindungsgemäßen Verfahrens ohne die Zugabe von Wasser, das heißt, die in-situ-Herstellung von Komponente (a2) ist nicht bevorzugt.

### Bevorzugte Kombinationen von (a1) und (a2)

Im Rahmen der bevorzugten Ausführungsform II enthält die organische Gelvorstufe (A) als Komponente (a1) mindestens ein Polyisocyanat und als Komponente (a2) mindestens eine gegenüber Isocyanaten reaktive Verbindung, wobei die Komponenten (a1) und (a2) jeweils eine Funktionalität von mindestens 2 aufweisen und die Summe der Funktionalitäten der Komponenten (a1) und (a2) mindestens 4,5 und bevorzugt mindestens 5 beträgt.

Dabei hängen wie weiter oben erläutert bevorzugte spezifische Kombinationen von Komponenten (a1) und (a2) unter anderem von den Funktionalitäten der jeweiligen Komponenten (a1) und (a2) sowie von den Reaktivitäten der einzelnen Verbindungen ab. Die bevorzugten spezifischen Kombinationen der Komponenten (a1) und (a2) werden im folgenden beschrieben.

Im Rahmen der bevorzugten spezifischen Ausführungsform II-α enthält die organische Gelvorstufe (A) als Komponente (a1) mindestens ein aromatisches Polyisocyanat, wobei Polyisocyanate auf Basis von TDI und/oder MDI, insbesondere Diisocyanate auf Basis von TDI und/oder MDI besonders bevorzugt sind. Die organische Gelvorstufe (A) enthält als Komponente (a2) gemäß dieser bevorzugten spezifischen Ausführungsform II-α des Weiteren mindestens ein aliphatisches Polyol mit einer OH-Funktionalität von 2,5 bis 8 und insbesondere mit einer OH-Funktionalität von 3 bis 6.

Geeignete aromatische Polyisocyanate oder Mischungen aus unterschiedlichen aromatischen Polyisocyanaten als Komponente (a1) mit einer Funktionalität von mindestens 2 wurden weiter oben beschrieben. Geeignete aliphatische Polyole oder Mischungen aus aliphatischen Polyolen wurden unter Punkt α) beschrieben.

Besonders bevorzugt ist die organische Gelvorstufe (A) auf Basis von mindestens einem aromatisches Polyisocyanat als Komponente (a1) und mindestens einem aliphatischen Polyol als Komponente (a2) aufgebaut, wobei die Komponente (a2) eine OH-Funktionalität von 2,5 bis 8 aufweist.

In einer bevorzugten spezifischen Ausführungsform II-β enthält die organische Gelvorstufe (A) als Komponente (a1) mindestens ein aromatisches Polyisocyanat und als Komponente (a2) mindestens eine phenolische Verbindung. Vorzugsweise ist die organische Gelvorstufe (A) auf Basis von mindestens einem aromatischen Polyisocyanat als Komponente (a1) und mindestens eine phenolische Verbindung als Komponente (a2) aufgebaut.

Geeignete aromatische Polyisocyanate oder Mischungen aus unterschiedlichen Polyisocyanaten als Komponente (a1) mit einer Funktionalität von mindestens 2 wurden weiter oben beschrieben. Geeignete phenolische Verbindungen wurden unter Punkt β) beschrieben.

Im Rahmen der bevorzugten spezifischen Ausführungsform II-β werden als Komponente (a1) insbesondere aromatische Polyisocyanate mit einer Funktionalität von 2 bis 3 eingesetzt, wobei Polyisocyanate auf Basis von TDI und/oder MDI, insbesondere Diisocyanate auf Basis von TDI und/oder MDI besonders bevorzugt sind. Als Komponente (a2) werden dabei bevorzugt phenolische Verbindungen mit einer OH-Funktionalität von zwei, insbesondere Resorcin, oder phenolische Verbindungen mit einer OH-Funktionalität von drei, insbesondere Phloroglucin, eingesetzt, wobei Phloroglucin besonders bevorzugt ist.

In einer weiteren bevorzugten spezifischen Ausführungsform II-γ enthält die organische Gelvorstufe (A) als Komponente (a1) mindestens ein Polyisocyanat und als Komponente (a2) mindestens eine hyperverzweigte Verbindung. Besonders bevorzugt ist die organische Gelvorstufe (A) auf Basis von mindestens einem Polyisocyanat als Komponente (a1) und mindestens einer hyperverzweigten Verbindung als Komponente (a2) aufgebaut.

Geeignete Polyisocyanate oder Mischungen aus unterschiedlichen Polyisocyanaten als Komponente (a1) mit einer Funktionalität von mindestens 2 wurden weiter oben beschrieben. Geeignete hyperverzweigte Verbindungen wurden unter Punkt γ) beschrieben.

Im Rahmen der bevorzugten spezifischen Ausführungsform II-γ werden als Komponente (a1) insbesondere aromatische Polyisocyanate mit einer Funktionalität von 2 oder ungefähr 2 eingesetzt, wobei Polyisocyanate auf Basis von TDI und/oder MDI, insbesondere Diisocyanate auf Basis von TDI und/oder MDI besonders bevorzugt sind. Als Komponente (a2) werden dabei bevorzugt hyperverzweigte polyolische Verbindungen mit einer OH-Funktionalität von 15 bis 100 eingesetzt, wobei hyperverzweigte polyolische Verbindungen mit einer OH-Funktionalität von 20 bis 100, insbesondere von 20 bis 80, besonders bevorzugt sind.

In einer weiteren bevorzugten spezifischen Ausführungsform II-δ enthält die organische Gelvorstufe (A) als Komponente (a1) mindestens ein Polyisocyanat und als Komponente (a2) mindestens ein aromatisches Amin. Besonders bevorzugt ist die organische Gelvorstufe (A) auf Basis von mindestens einem Polyisocyanat als Komponente (a1) und mindestens einem aromatischen Amin als Komponente (a2) aufgebaut.

Geeignete Polyisocyanate oder Mischungen aus unterschiedlichen Polyisocyanaten als Komponente (a1) mit einer Funktionalität von mindestens zwei wurden weiter oben beschrieben. Geeignete aromatische Amine mit einer Funktionalität von mindestens zwei wurden unter Punkt δ) beschrieben.

Im Rahmen der bevorzugten spezifischen Ausführungsform II-δ enthält die organische Gelvorstufe (A) als Komponente (a1) bevorzugt mindestens ein aromatisches Polyisocyanat, wobei die Komponente (a1) bevorzugt eine Funktionalität von 2,5 bis 3,5 und besonders bevorzugt von 2,5 bis 3 aufweist. Polyisocyanate auf Basis von MDI, insbesondere oligomeres Diphenylmethandiisocyanat und Roh-MDI sind hierbei als Komponente (a1) ganz besonders bevorzugt.

Im Rahmen der bevorzugten spezifischen Ausführungsform II-δ enthält die organische Gelvorstufe (A) als Komponente (a2) des Weiteren bevorzugt aromatische Amine auf Basis von Diaminodiphenylmethan oder Toluylendiamin. Besonders bevorzugt enthält die Komponente (a2) mindestens ein aromatisches Amin ausgewählt aus 4,4'-Diaminodiphenylmethan, 2,4'-Diaminodiphenylmethan, 2,2'-Diaminodiphenylmethan und oligomeres Diaminodiphenylmethan.

### Herstellung der Gele unter Ausführungsform II

Die Umsetzung der Komponente (a1) mit Komponente (a2) kann im Rahmen der bevorzugten Ausführungsform II in Gegenwart von mindestens einem Katalysator (b1) erfolgen. Im Rahmen der weiter oben beschriebenen spezifischen bevorzugten Ausführungsformen II-α, 11-β und II-γ werden bevorzugt Urethankatalysatoren verwendet. Im Rahmen der weiter oben beschriebenen spezifischen bevorzugten Ausführungsform II-δ wird bevorzugt kein Katalysator verwendet

Sofern ein Katalysator (b1) eingesetzt wird, kommt prinzipiell ein die Urethanbildung katalysierender Katalysator (im folgenden Urethankatalysator genannt) oder ein die Isocyanat-Trimerisierung katalysierender Katalysator (im folgenden Trimerisationskatalysator genannt) in Betracht, wobei Urethankatalysatoren besonders bevorzugt verwendet werden. Bevorzugte Urethankatalysatoren sind Zinn- und/oder Titanorganische Verbindungen und/oder geeignete Amine, besonders bevorzugt Zinnsalze oder Aminobasen, bevorzugt tertiäre Amine, besonders bevorzugt Dibutylzinn-Salze oder tertiäre aliphatische Amine. Geeignete Katalysatoren (b1) werden im folgenden beispielhaft beschrieben.

Falls Mischungen von Trimerisations- und Urethankatalysatoren eingesetzt werden, dann können diese in jeder geeigneten Kombination benutzt werden. Der Aufbau der Katalysatormischung hängt vom gewünschten Reaktionsprofil und der Stöchiometrie der Ausgangsstoffe ab. Beispielsweise begünstigt ein hoher Anteil an Isocyanatgruppen die Trimerisation. Alternativ kommen Katalysatoren zum Einsatz, die beide Reaktionen, die Polyurethanbildung und die Isocyanuratbildung, katalysieren. Allerdings sind in der Regel Katalysatoren, die überwiegend oder ausschließlich die Bildung einer der beiden Verknüpfungen, Urethan und Isocyanurat, katalysieren, vorzuziehen. Die Bildung von Harnstoffgruppen erfolgt üblicherweise so schnell, dass der Einsatz eines Katalysators nicht notwendig ist. Die Bildung von Gelen auf Basis von Polyharnstoff, insbesondere die spezifische bevorzugte Ausführungsform II-δ erfolgt deshalb ohne Zugabe eines Katalysators.

Der Katalysator oder die Katalysatormischung (b1) wird bevorzugt zusammen mit den gegenüber Isocyanaten reaktiven Verbindungen (a2) im Lösungsmittel (C) gelöst. Die Umsetzung der Gelvorstufe (A) zu einem Gel in Schritt (b) des erfindungsgemäßen Verfahrens wird durch Vereinen der optional Katalysator-enthaltenden Lösung der gegenüber Isocyanaten reaktiven Komponente (a2) mit der Komponente (a1) gestartet.

Der Gehalt an Katalysatoren (b1) beträgt bevorzugt von 0,01 bis 2 Gew.-%, besonders bevorzugt von 0,05 bis 1 Gew.-%, bezogen auf das Gesamtgewicht der Komponenten (a1) und (a2). Durch Wahl der Katalysatormenge und Konzentration des Lösungsmittels lässt sich die Gelierungszeit im Bereich zwischen wenigen Minuten und Stunden einstellen.

Geeignete Trimerisationskatalysatoren als Komponente (b1) schließen bekannte Katalysatoren wie quaternäre Ammoniumhydroxide, Alkalimetall- und Erdalkalimetallhydroxide, -alkoxide und -carboxylate, z.B. Kaliumacetat und Kalium-2-ethylhexanoat, bestimmte tertiäre Amine und nicht-basische Metallcarboxylate, z.B. Bleioktoat und Triazinderivate, insbesondere symmetrische Triazinderivate, ein. Besonders bevorzugt werden Triazinderivate.

Geeignete Urethankatalysatoren als Komponente (b1), welche insbesondere die Reaktion zwischen den NCO-Gruppen der Polyisocyanate (a1) und den gegenüber Isocyanaten reaktiven Gruppen der Komponente (a2), insbesondere den Hydroxylgruppen und/oder Aminogruppen beschleunigen, sind die nach dem Stand der Technik bekannten und üblichen tertiären Amine, wie Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan, 8-Diazabicyclo[5.4.0]undec-7-ene (DBU) und ähnliche Verbindungen sowie insbesondere organische Metallverbindungen wie Titansäureester, Eisenverbindungen wie Eisen-(III)- acetylacetonat, Zinnverbindungen, insbesondere Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind solche, die im gewählten Lösungsmittel (C) eine hohe Löslichkeit aufweisen.

Als Lösungsmittel (C) der bevorzugten Ausführungsform II, in dessen Gegenwart die Umsetzung der Polyisocyanate (a1) mit der Komponente (a2) erfolgt, kommen die aus dem Stand der Technik bekannten Lösungsmittel für Polyisocyanat-basierte Polymere in Frage. Bevorzugte Lösungsmittel sind dabei solche, die ein Lösungsmittel für beide Komponenten, (a1) und (a2) sind, d. h. solche, die die Komponenten (a1) und (a2) unter Reaktionsbedingungen weitgehend vollständig lösen. Bevorzugt ist das Lösungsmittel (C) gegenüber Komponente (a1) inert, d. h., nicht reaktiv.

Als Lösungsmittel (C) sind im Rahmen der bevorzugten Ausführungsform II beispielsweise Dialkylether, zyklische Ether, Ketone, Alkylalkanoate, Amide wie Formamid und N-Methylpyrollidon, Sulfoxide wie Dimethylsulfoxid, aliphatische und cycloaliphatische halogenierte Kohlenwasserstoffe, halogenierte aromatische Verbindungen und fluorhaltige Ether besonders geeignet. Ebenso in Betracht kommen Mischungen aus zwei oder mehreren der vorgenannten Verbindungen. Besonders bevorzugt werden als Lösungsmittel (C) im Rahmen der bevorzugten Ausführungsform II aliphatische Ketone, Dialkylether und Alkylalkanoate.

Im Rahmen der bevorzugten Ausführungsform II als Lösungsmittel (C) geeignete Dialkylether sind insbesondere solche mit 2 bis 6 Kohlenstoffatomen, insbesondere Dimethylether, Methylethylether, Diethylether, Methyl-Propylether, Methyl-Isopropylether, Propyl-Ethylether, Ethyl-Isopropylether, Dipropylether, Propyl-Isopropylether, Diisopropylether, Methyl-Butylether, Methyl-Isobutylether, Methyl-t-Butylether, Ethyl-n-Butylether, Ethyl-Isobutylether und Ethyl-t-Butylether. Geeignete zyklische Ether sind insbesondere Tetrahydrofuran und Tetrahydropyran.

Im Rahmen der bevorzugten Ausführungsform II als Lösungsmittel (C) geeignete aliphatische Ketone sind insbesondere Aceton, Cyclohexanon, Methyl-t-Butylketon und Methyl-Ethylketon. Als Lösungsmittel (C) geeignete Alkylalkanoate sind insbesondere Methylformiat, Methylacetat, Ethylformiat, Butylacetat und Ethylacetat. Geeignete halogenierte Lösungsmittel sind in der WO 00/24799, Seite 4, Zeile 12 bis Seite 5, Zeile 4 beschrieben.

In vielen Fällen ergeben sich besonders geeignete Lösungsmittel (C), indem man zwei oder mehrere miteinander vollständig mischbare Verbindungen, ausgewählt aus den vorgenannten Verbindungen, in Form eines Gemisches einsetzt.

Die Gelierung in Schritt (b) des erfindungsgemäßen Verfahrens erfolgt im Rahmen der bevorzugten Ausführungsform II zudem üblicherweise bei einer Temperatur im Bereich von ungefähr 20°C, insbesondere bei Raumtemperatur. In vielen Fällen hat es sich als vorteilhaft erwiesen, Schritt (b) nicht bei erhöhter Temperatur durchzuführen, um die mechanischen Eigenschaften der Gele nicht negativ zu beeinflussen.

### Schritt (c)

Erfindungsgemäß erfolgt in Schritt (c) des erfindungsgemäßen Verfahrens eine Modifizierung des in Schritt (b) erhaltenen Gels mittels mindestens einer organischen Verbindung (D), welche weder in Schritt (a) noch in Schritt (b) zugegen war. Unter einer organischen Verbindung sind im Rahmen der vorliegenden Erfindung solche Verbindungen zu verstehen, die keine Metalle und keine Halbmetalle wie Silicium enthalten. Bevorzugt enthält die organische Verbindung (D) reaktive funktionelle Gruppen, die gegenüber dem in Schritt (b) erhaltenen Gel reaktiv sind.

Die Modifizierung verringert bevorzugt die Verträglichkeit des erhaltenen Gels, insbesondere die Verträglichkeit der Porenoberfläche des Gels, mit dem Lösungsmittel (C). Die Verbindung (D) ist somit bevorzugt eine Verbindung, welche mit der Porenoberfläche des Gels aus Schritt (b) in Kontakt kommt und dort verbleibt, wobei die Verträglichkeit des erhaltenen Gels mit dem Lösungsmittel (C) verringert wird. Unter Verringerung der Verträglichkeit ist zu verstehen, dass die anziehende Wechselwirkung zwischen dem Gel und der mit dem Gel in Kontakt befindlichen flüssigen Phase veringert wird. Somit handelt es sich im Rahmen der vorliegenden Erfindung bei der Verträglichkeit um eine thermodynamische Verträglichkeit, wobei bei abnehmender Verträglichkeit eine zunehmende mikroskopische Trennung erfolgt, das heißt die Komponenten besitzen bei einer verringerten Verträglichkeit eine verringerte Tendenz, sich auf molekularer Ebene zu durchdringen, insbesondere in Form einer Quellung des Gels durch das Lösungsmittel (C). Unter Verträglichkeit von Gel und Lösungsmittel (C) ist die Stärke der physikalisch-chemischen Interaktion zwischen der Porenoberfläche des Gels und dem Lösungsmittel zu verstehen. Sie wird bestimmt durch physikalisch-chemische Wechselwirkungen wie zum Beispiel der Wechselwirkung zwischen apolaren Verbindungen beziehungsweise Dipol-Dipol-Wechselwirkungen oder Wasserstoffbrücken.

Als Verbindung (D) sind im Rahmen des erfindungsgemäßen Verfahrens grundsätzlich solche organischen Verbindungen bevorzugt, die gegenüber dem Lösungsmittel (C) nicht reaktiv sind. Gegenüber dem Lösungsmittel (C) nicht reaktiv bedeutet, dass die Verbindung (D) mit dem Lösungsmittel (C) keine chemische Reaktion eingeht und insbesondere durch das Lösungsmittel (C) nicht hydrolysiert beziehungsweise nicht solvolysiert wird.

Unter Modifizierung des Gels soll jede Maßnahme verstanden werden, bei der die Porenoberfläche des Gels durch mindestens eine Verbindung (D) modifiziert wird. Bevorzugt erfolgt die Modifizierung durch eine chemische Umsetzung zwischen der Verbindung (D) und dem Gel (im folgenden chemische Modifizierung genannt), insbesondere im Bereich der Porenoberfläche des Gels. Grundsätzlich kann die Modifizierung auch durch physikalisch-chemische Wechselwirkungen erfolgen, die nicht durch eine chemische Umsetzung im eigentlichen Sinn zustande kommen, insbesondere durch Wasserstoffbrücken oder andere intermolekulare Wechselwirkungen, beispielsweise ionische Wechselwirkungen und Donor-Akzeptor-Wechselwirkungen, so dass hier keine chemische Modifizierung vorliegt. Die physikalisch-chemischen Wechselwirkungen müssen dabei zumindest so stark sein, dass die Verträglichkeit des so modifizierten Gels mit dem Lösungsmittel verändert wird. Bevorzugt erfolgt in Schritt (c) jedoch eine chemische Modifizierung des erhaltenen Gels.

Als Porenoberfläche wird dabei derjenige Bereich des Gels angesehen, der durch die Verbindung (D) zugänglich ist, das heißt, entweder an der Grenzfläche zwischen Gel und Flüssigkeit liegt oder durch die in den Poren des Gels enthaltene Flüssigkeit erreichbar ist, insbesondere durch Quellung.

Die Verträglichkeit wird bevorzugt bestimmt, indem man das Gel bis zum Zeitpunkt des Erreichens des Endpunktes der Quellung mit dem Lösungsmittel (C) in Kontakt bringt und das Quellvermögen bestimmt. Die Verringerung des Quellvermögens dient dabei zur Charakterisierung der Verringerung der Verträglichkeit des Gels mit dem Lösungsmittel (C). Die erfindungsgemäße Modifizierung des erhaltenen Gels mittels mindestens einer organischen Verbindung (D) in Schritt (c) des erfindungsgemäßen Verfahrens verringert bevorzugt das Quellvermögen des Gels im Lösungsmittel (C). Unter Verringerung des Quellvermögens (QV) ist QV = (Vₚₛ - V₀) / V₀ zu verstehen, wobei Vₚₛ das partielle spezifische Volumen des Polymers im Gel unter gequollenen Bedingungen und V₀ das spezifische Volumen im ungequollenen Trockenzustand ist. Die spezifischen Volumina können insbesondere durch Pyknometrie bestimmt werden.

Durch die verringerte Verträglichkeit verstärkt sich die Phasenseparation von Polymer und Lösungsmittel. Hieraus resultiert im Allgemeinen ein vergrößertes mittleres Porenvolumen nach der Trocknung des modifizierten Gels im Vergleich zum nichtmodifizierten Gel.

Das Quellvermögen kann zum Vergleich der Verträglichkeit zwischen unter ansonsten identischen Bedingungen erhältlichen Gelen eingesetzt werden, um so den Einfluss der Modifizierung des Gels in Schritt (c) des erfindungsgemäßen Verfahrens zu bestimmen.

Die Modifizierung des Gels erfolgt bevorzugt durch Reaktion mit chemischen Gruppen im Bereich der Porenoberfläche des Gels (chemische Modifizierung). Bei einer chemischen Modifizierung des Gels kann gleichzeitig eine Vernetzung im Bereich der Porenoberfläche erfolgen, falls eine Verbindung (D) eingesetzt wird, die mehr als eine reaktive funktionelle Gruppe beinhaltet.

Welche Verbindung (D) zur Modifizierung einsetzbar ist, hängt von der chemischen Natur des Gels beziehungsweise von den chemischen Funktionalitäten im Bereich der Porenoberfläche des Gels ab. Der Fachmann wählt die Verbindung (D) bevorzugt so, dass durch die Modifizierung die Verträglichkeit des Gels mit dem Lösungsmittel verringert wird.

Im Rahmen der bevorzugten Ausführungsform I wird zur Modifizierung des Gels in Schritt (c) als Verbindung (D) bevorzugt mindestens ein Aldehyd verwendet. Besonders bevorzugt wird zur Modifizierung des Gels als organische Verbindung (D) mindestens ein Dialdehyd verwendet, insbesondere mindestens ein Dialdehyd ausgewählt aus Glyoxal und Glutaraldehyd.

Im Rahmen der weiter oben beschriebenen bevorzugten Ausführungsform II wird in einer spezifischen, besonders bevorzugten Ausführungsform die Komponente (a1) so zugegeben, dass die reaktiven funktionellen Gruppen im molaren Überschuss relativ zu den reaktiven funktionellen Gruppen der Komponente (a2) vorliegen.

Als Verbindung (D) kommen in diesem Fall bevorzugt Amine in Betracht, die gegenüber Isocyanaten reaktiv sind und durch deren Umsetzung mit dem Gel eine verringerte Verträglichkeit des resultierenden Gels mit dem Lösungsmittel resultiert. Hierbei kommen als Verbindung (D) insbesondere Amine in Betracht, die eine zum Lösungsmittel entgegengesetzte Polarität aufweisen und gegenüber Isocyanaten reaktiv sind.

Unter entgegengesetzter Polarität soll dabei eine entgegengesetzte Richtung der Polarität verstanden werden und kein absoluter Betrag. Durch die Modifizierung mit mindestens einer Verbindung (D) mit entgegengesetzter Polarität in Schritt (c) des erfindungsgemäßen Verfahrens wird die Verträglichkeit mit dem Lösungsmittel herabgesetzt. Entgegengesetzt bedeutet bei einem polaren Lösungsmittel (C) ein Polyisocyanat, das die Polarität der Porenoberfläche herabsetzt, und bei einem (weniger bevorzugten) unpolaren Lösungsmittel (C) ein Polyisocyanat, das die Polarität der Porenoberfläche erhöht. Bei einem moderat polaren Lösungsmittel gibt es zwei Möglichkeiten für entgegengesetzte Polarität, ein Polyisocyanat, das die Porenoberfläche polar modifiziert oder - was bevorzugt ist - ein Polyisocyanat, das durch Modifizierung die Porenoberfläche in ihrer Polarität soweit herabsetzt, dass die Verträglichkeit mit dem moderat polaren Lösungsmittel verringert wird.

Im Rahmen dieser spezifischen, besonders bevorzugten Ausführungsform wird zur Modifizierung des Gels als Verbindung (D) insbesondere mindestens ein aromatisches Diamin verwendet. Ganz besonders bevorzugt liegen die reaktiven Gruppen der Komponente (a1) relativ zu den reaktiven funktionellen Gruppen der Komponente (a2) in der Gelvorstufe (A) im molaren Überschuss von 5 bis 15 mol-% vor, wobei zur Modifizierung des Gels als Verbindung (D) mindestens ein aromatisches Diamin verwendet wird.

Die Amine reagieren im Rahmen dieser spezifischen, besonders bevorzugten Ausführungsform mit überschüssigen Isocyanatgruppen des Gels an der Porenoberfläche unter Bildung von Harnstoffgruppen. Hierdurch verringert sich bevorzugt die Verträglichkeit des Gels mit dem verwendeten Lösungsmittel (C).

Als Verbindung (D) in Betracht kommende aromatische Amine sind im Rahmen dieser spezifischen bevorzugten Ausführungsform beispielsweise diejenigen, welche unter d) beschrieben wurden. Bevorzugte aromatische Amine als Verbindung (D) sind Diamine auf Basis von Diaminodiphenylmethan (MDA), insbesondere 4,4' und /oder 2,4'-und/oder 2,6'-MDA, und/oder Toluylendiamin (TDA), insbesondere 2,4- und/oder 2,6-TDA. Ebenso kommen die oben beschriebenen mehrkernigen Oligomere des MDA entweder als solche oder in Mischung mit monomerem MDA in Betracht.

Besonders bevorzugt werden als organische Verbindung (D) im Rahmen der bevorzugten Ausführungsform II Diphenylsulfone mit mindestens zwei Aminogruppen, insbesondere Diamino-diphenlysulfone (DADPS) verwendet, wobei 4,4'-DADPS ganz besonders bevorzugt ist.

Ganz besonders bevorzugt liegen die reaktiven funktionellen Gruppen der Komponente (a1) relativ zu den reaktiven funktionellen Gruppen der Komponente (a2) in der Gelvorstufe (A) im molaren Überschuss von 5 bis 15 mol-% vor, wobei zur Modifizierung des Gels als Verbindung (D) mindestens ein Diamino-diphenlysulfone (DADPS), insbesondere 4,4'-DADPS, verwendet wird.

Alternativ wird im Rahmen der weiter oben beschriebenen bevorzugten Ausführungsform II in einer zweiten spezifischen bevorzugten Ausführungsform die Komponente (a2) im molaren Überschuss zugegeben. In diesem Fall kommen als Verbindung (D) insbesondere Verbindungen in Betracht, die gegenüber der Komponente (a2) reaktiv sind und durch deren Umsetzung mit dem Gel eine verringerte Verträglichkeit des resultierenden Gels mit dem Lösungsmittel (C) resultiert. Insbesondere können die gegenüber Komponente (a2) reaktiven Verbindungen (D) eine zum Lösungsmittel entgegengesetzte Polarität aufweisen.

Insbesondere kommen als Verbindung (D) im Rahmen dieser zweiten spezifischen bevorzugten Ausführungsform die weiter oben diskutierten Polyisocyanate (a1) in Betracht, wobei erfindungsgemäß die Verbindung (D) nicht Bestandteil der organischen Gelvorstufe (A) in den Schritten (a) und (b) des erfindungsgemäßen Verfahrens war und darüber hinaus bevorzugt die Porenoberfläche in ihrer Polarität entgegengesetzt modifiziert.

### Schritt (d)

Erfindungsgemäß wird in Schritt (d) das Gel aus Schritt (c) durch Überführung des Lösungsmittels (C) in den gasförmigen Zustand bei einer Temperatur und einem Druck unterhalb der kritischen Temperatur und des kritischen Drucks des Lösungsmittels (C) getrocknet. Die Trocknung des Gels in Schritt (d) erfolgt ohne vorherigen teilweisen oder vollständigen Austausch des Lösungsmittels (C) gegen ein weiteres Lösungsmittel.

Folglich bringt man nach Schritt (c) und vor Schritt (d) das Gel nicht mit einer organischen Flüssigkeit in Kontakt, um das im Gel, insbesondere in den Poren des Gels, enthaltene Lösungsmittel (C), beispielsweise Wasser, gegen diese organische Flüssigkeit auszutauschen. Dies gilt unabhängig davon, ob das Gel gealtert wird oder nicht. Hierdurch ist das erfindungsgemäße Verfahren besonders einfach und kostengünstig in der Durchführung.

Für die Trocknung durch Überführung des Lösungsmittels (C) in den gasförmigen Zustand kommen grundsätzlich sowohl Verdunstung als auch Verdampfung, jedoch nicht die Sublimation in Betracht. Das Trocknen durch Verdunstung oder Verdampfung schließt insbesondere das Trocknen unter Atmosphärendruck, das Trocknen im Vakuum, das Trocknen bei Raumtemperatur und das Trocknen bei erhöhter Temperatur, jedoch nicht das Gefriertrocknen ein. Erfindungsgemäß trocknet man bei einem Druck und einer Temperatur, die unterhalb des kritischen Druckes und unterhalb der kritischen Temperatur des Lösungsmittels (C), das heißt der flüssigen Phase des Gels, liegen. In Schritt (d) des erfindungsgemäßen Verfahrens trocknet man somit das lösungsmittelhaltige Gel, wobei als Verfahrensprodukt das organische Xerogel entsteht.

Zum Trocknen des Gels öffnet man üblicherweise die Geliervorrichtung und hält das Gel so lange unter den genannten Druck- und Temperaturbedingungen, bis die flüssige Phase durch Übergang in den gasförmigen Zustand entfernt ist, d.h. man verdunstet beziehungsweise verdampft die flüssige Phase. Um das Verdunsten zu beschleunigen, ist es häufig vorteilhaft, das Gel aus dem Behälter zu entfernen. Auf diese Weise wird die Phasengrenzfläche Gel/Umgebungsluft, worüber die Verdunstung und/oder Verdampfung stattfindet, vergrößert. Beispielsweise kann man das Gel zum Trocknen auf eine ebene Unterlage oder ein Sieb geben. Als Trocknungsverfahren kommen außerdem die dem Fachmann geläufigen Trocknungsverfahren wie Konvektionstrocknung, Mikrowellentrocknung, Vakuumtrockenschränke oder Kombinationen dieser Verfahren in Betracht.

Man kann das Gel an der Luft, oder falls es sauerstoffempfindlich ist, auch an anderen Gasen wie Stickstoff oder Edelgasen trocknen, und dazu gegebenenfalls einen Trockenschrank oder andere geeignete Vorrichtungen verwenden, in denen sich der Druck, die Temperatur sowie der Lösungsmittelgehalt der Umgebung kontrollieren lässt.

Die beim Trocknen zu wählenden Temperatur- und Druckbedingungen hängen unter anderem von der Natur des Lösungsmittels (C) ab. Erfindungsgemäß wird bei einem Druck getrocknet, der unter dem kritischen Druck pₖᵣᵢₜ des Lösungsmittels (C) liegt, und bei einer Temperatur getrocknet, die unter der kritischen Temperatur Tₖᵣᵢₜ des Lösungsmittels (C) liegt. Man trocknet demnach unter sub-kritischen Bedingungen.

Dabei bedeutet kritisch: beim kritischen Druck und der kritischen Temperatur ist die Dichte der flüssigen Phase gleich der Dichte der Gasphase (sog. kritische Dichte), und bei Temperaturen oberhalb Tₖᵣᵢₜ lässt sich die fluide Phase auch bei Anwendung höchster Drucke nicht mehr verflüssigen. Für Wasser als Lösungsmittel (C) beträgt Tₖᵣᵢₜ 374°C und pₖᵣᵢₜ 221,29 bar (absolut).

Setzt man als Lösungsmittel (C) Wasser ein, dann trocknet man üblicherweise das wasserhaltige Gel bei Temperaturen von 0°C bis 150°C, bevorzugt 10°C bis 120°C und besonders bevorzugt 15°C bis 100°C, und bei Drucken von Hochvakuum, beispielsweise von 10⁻⁷ mbar, bis 10 bar, bevorzugt 1 mbar bis 5 bar und insbesondere 10 mbar bis ungefähr 1 bar (absolut). Insbesondere kann man bei Atmosphärendruck und von 0°C bis 80°C, insbesondere bei Raumtemperatur, trocknen. Besonders bevorzugt trocknet man in Schritt (d) ein wasserhaltiges Gel bei einem Druck von 0,5 bis 2 bar (absolut), und bei einer Temperatur von 0 bis 100°C.

Andere Lösungsmittel (C) als Wasser erfordern Anpassungen der Trocknungsbedingungen (Druck, Temperatur, Zeit), die der Fachmann durch einfache Versuche ermitteln kann. Im allgemeinen können die entsprechenden Trocknungszeiten bei Verwendung organischer Lösungsmittel unter milderen Trocknungsbedingungen, das heißt bei geringeren Temperaturen und/oder bei geringerem Vakuum realisiert werden.

Das Trocknen kann durch Anwendung eines Vakuums beschleunigt bzw. vervollständigt werden. Um die Trocknungswirkung weiter zu verbessern, kann man diese Vakuumtrocknung bei einer höheren Temperatur vornehmen als das Trocknen bei üblichem Druck. Insbesondere kann man den Großteil von Wasser als Lösungsmittel (C) zunächst bei Raumtemperatur und Atmosphärendruck innerhalb von 30 min bis 3 Stunden entfernen, und danach das Gel bei 40 bis 80°C unter einem Vakuum von vorzugsweise 1 bis 100 mbar, insbesondere 5 bis 30 mbar, innerhalb von 10 min bis 6 Stunden trocknen. Selbstverständlich sind auch längere Trocknungszeiten möglich, beispielsweise von 1 bis 5 Tagen. Bevorzugt sind jedoch häufig Trocknungszeiten von unter 12 Stunden.

Statt einer solchen stufenweisen Trocknung kann man den Druck während des Trocknens auch kontinuierlich, beispielsweise linear oder exponentiell absenken, bzw. die Temperatur in solcher Weise erhöhen, d.h. gemäß eines Druck- bzw. Temperaturprogramms trocknen. Naturgemäß trocknet das Gel umso schneller, je geringer der Feuchtigkeitsgehalt der Luft ist. Gleiches gilt sinngemäß für andere flüssige Phasen als Wasser und andere Gase als Luft.

Die bevorzugten Trocknungsbedingungen hängen nicht nur vom Lösungsmittel, sondern auch von der Natur des Gels ab, insbesondere die Stabilität des Netzwerkes im Verhältnis zu den weiter oben beschriebenen Kapillarkräften. Durch das erfindungsgemäße Verfahren lassen sich die bei der Entfernung des Lösungsmittels auf das polymere Netzwerk wirkende Kräfte verringern.

Beim Trocknen in Stufe (d) wird die flüssige Phase in der Regel vollständig oder bis auf einen Restgehalt von 0,01 bis 1 Gew.-%, bezogen auf das erhaltene Xerogel, entfernt.

### Eigenschaften der Xerogele

Im Rahmen der vorliegenden Erfindung ist unter einem organischen Xerogel ein poröses Material im wesentlichen polymerer organischer Natur mit einer Porosität von mindestens 60 Vol.-% und einer volumengewichteten mittleren Porengröße von höchstens 5 mm, bevorzugt höchstens 1 mm ("Nanometerbereich") zu verstehen, welches durch ein Sol-Gel-Verfahren hergestellt wurde, wobei die flüssige Phase durch Trocknung unterhalb der kritischen Temperatur und unterhalb des kritischen Drucks der flüssigen Phase ("subkritische Bedingungen") aus dem Gel entfernt wurde.

Mit dem erfindungsgemäßen Verfahren kann man ein poröses Material mit einem volumengewichteten mittleren Porendurchmesser von höchstens 1 µm erhalten. Bevorzugt beträgt der volumengewichtete mittlere Porendurchmesser 10 nm bis 1 µm. Die besonders bevorzugten mittleren Porendurchmesser der Xerogele hängen von der späteren Anwendung ab, insbesondere vom Druck, der in der späteren Anwendung des organischen Xerogels in den Poren vorliegt.

Bei einer Anwendung als Dämmstoff, auch Isolationsmaterial genannt, unter Druckverhältnissen in den Poren des Xerogels im Bereich des Vakuums, vorzugsweise von 0,1 bis 50 mbar, beträgt die bevorzugte volumengewichtete mittlere Porengröße von 100 bis 1000 nm. Bei Anwendungen als Dämmstoff unter Druckverhältnissen in den Poren, die dem Atmosphärendruck oder einem Druck geringfügig ober- oder unterhalb des Atmosphärendrucks entsprechen, beträgt die bevorzugte volumengewichtete mittlere Porengröße nicht mehr als 300 nm, besonders bevorzugt von 20 bis 300 nm, insbesondere nicht mehr als 200 nm und ganz besonders bevorzugt von 20 nm bis 200 nm. Zwar ist eine möglichst geringe Porengröße aus Sicht reduzierter Wärmeleitfähigkeit grundsätzlich erwünscht, doch ist die mittlere Porengröße durch die sich verschlechternden mechanischen Eigenschaften des Xerogels, insbesondere dessen Stabilität und Verarbeitbarkeit, durch praktische Erwägungen nach unten begrenzt.

Bevorzugt weist der Schaum eine Porosität von mindestens 70 Vol.-%, insbesondere von 70 bis 99 Vol.-%, besonders bevorzugt mindestens 80 Vol.-% auf, insbesondere von 80 bis 95 Vol.-% und ganz besonders bevorzugt mindestens 85 Vol.-%, insbesondere von 85 bis 95 Vol.-%. Die Porosität in Vol.-% bedeutet, dass der genannte Anteil des Schaumvolumens aus Poren besteht. Zwar ist aus Sicht einer minimalen Wärmeleitfähigkeit meist eine möglichst hohe Porosität erwünscht, doch ist die Porosität durch die mechanischen Eigenschaften und die Verarbeitbarkeit des Polymerschaums nach oben begrenzt.

Die Porosität und die volumengewichtete mittlere Porengröße wird in einem Porosimeter durch Quecksilber-Intrusionsmessung ermittelt. Dabei wird Quecksilber in eine Probe des Schaums gepresst. Kleine Poren erfordern einen höheren Druck, um mit Hg gefüllt zu werden als große Poren, und aus dem entsprechenden Druck/Volumen-Diagramm kann man die Verteilung der Porengröße und insbesondere die mittlere Porengröße bestimmen.

Die Dichte der gemäß des erfindungsgemäßen Verfahrens erhältlichen organischen Xerogele beträgt üblicherweise 20 bis 600 g/l, bevorzugt 50 bis 500 g/l und besonders bevorzugt 100 bis 400 g/l.

Das erfindungsgemäße Verfahren ergibt ein zusammenhängendes poröses Material und nicht nur ein Polymerpulver oder -partikel. Dabei wird die räumliche Form des resultierenden Xerogels durch die Form des Gels bestimmt, die wiederum durch die Form der Geliervorrichtung bestimmt wird. So ergibt beispielsweise ein zylindrischer Gelierbehälter üblicherweise ein annähernd zylinderförmiges Gel, dass dann zu einem Xerogel in Zylinderform getrocknet wird.

Die durch das erfindungsgemäße Verfahren erhältlichen Xerogele besitzen eine geringe Wärmeleitfähigkeit und eine hohe Porosität bei geringer Dichte und geringer mittlerer Porengröße. Dadurch ermöglicht das erfindungsgemäße Verfahren die Herstellung bislang unbekannter organischer Xerogele, das heißt die Herstellung von neuen Xerogelen mit erhöhter Porosität auf Basis bekannter Einsatzstoffe oder die Herstellung von neuen Xerogelen auf Basis von Einsatzstoffen. Die erfindungsgemäßen Xerogele können in einem Druckbereich eingesetzt werden, der bislang nur für Aerogele in Betracht kam. Hierdurch wird eine Verbindung aus hoher Porosität und geringer Dichte, das heißt günstigen Eigenschaften als Dämmmaterial einerseits und günstige Materialeigenschaften wie einfache Verarbeitbarkeit und hohe mechanische Stabilität, beispielsweise geringe Brüchigkeit, andererseits möglich. Die erfindungsgemäßen organischen Xerogele eignen sich insbesondere für den Einsatz als Dämmstoff. Insbesondere eignen sind die erfindungsgemäßen organischen Xerogele zur thermischen Isolation (Wärmedämmung).

Durch das erfindungsgemäße Verfahren lassen sich folgende Vorteile gegenüber einem organischen Xerogel, das unter Weglassen des Verfahrensschrittes (c), jedoch unter ansonsten identischen Verfahrensbedingungen erhältlich ist, erzielen:
1. Verringerung der Trocknungszeit um mindestens 30 %;
2. Erhöhung der Porosität um mindestens 20 % bezogen auf die Porosität eines entsprechenden Xerogels, welches unter Weglassen des Verfahrensschrittes (c) erhalten wurde.

### Beispiele

Die Funktionalität, soweit nicht durch die einheitliche chemische Struktur eindeutig festgelegt, wurde rechnerisch nach der Formel Hydroxylzahl [in mg/g KOH] x zahlenmittleres Molekulargewicht / 56100 = Funktionalität bestimmt.

Die Bestimmung des Porenvolumens in ml pro g Probe und der volumengewichteten mittleren Porengröße der Materialien erfolgte mittels Quecksilber-Porosimetrie nach DIN 66133 (1993) bei Raumtemperatur. Die mittlere Porengröße ist im Rahmen dieser Erfindung gleichzusetzen mit dem volumengewichteten mittleren Porendurchmesser. Die Bestimmung der volumengewichteten mittleren Porengröße erfolgt dabei rechnerisch aus der nach oben genannter Norm bestimmten Porengrößenverteilung.

Die Porosität in der Einheit Vol.-% wurde gemäß der Formel P = (Vᵢ / (Vᵢ + Vₛ)) * 100 Vol.-% berechnet, wobei P die Porosität, Vᵢ das Hg-Intrusionsvolumen nach DIN 66133 in ml/g und Vₛ das spezifische Volumen in ml/g des Probenkörpers ist.

Die Dichte r des porösen Materials in der Einheit g/ml wurde gemäß der Formel r = 1 /(Vᵢ + Vₛ) berechnet. Als spezifisches Volumen für poröse Materialien auf Basis von Melamin und Formaldehyd wurde der Wert 1 / Vₛ = 1,68 g/ml und als spezifisches Volumen für poröse Materialien auf Basis von Polyisocyanat wurde der Wert 1 / Vₛ = 1,38 g/ml verwendet. Beide Werte wurden durch He-Pyknometrie bestimmt.

Die Schrumpfung wurde semiquantitativ nach dem Augenschein bestimmt.

### Beispiel 1V:

a) 27,5 g einer klaren wässrigen Lösung eines Melamin-Formaldehyd-Vorkondensats mit einer Viskosität von weniger als 100 mPa*s und mit einem Gehalt von 19 Gew.-% und einem Molverhältnis Melamin zu Formaldehyd von 1 : 1,5 wurden bei 20°C in ein Becherglas gegeben.
b) Es wurden unter Rühren bei 20°C 2,5 g einer 100 gew.-%igen Ameisensäure zugefügt. Man erhielt eine klare, niedrigviskose Mischung. Anschließend wurde die Mischung 24 Stunden bei 60°C stehen gelassen, wobei sich ein Gel bildete.
d) Anschließend wurde das Gel aus Schritt b) aus dem Becherglas genommen und die Flüssigkeit (Wasser und Ameisensäure) durch 7 Tage langes Trocknen bei 20°C unter Atmosphärendruck entfernt.

Das erhaltene Material hatte ein Porenvolumen von 1,536 ml/g und einen volumengewichteten mittleren Porendurchmesser von 0,118 µm. Die Porosität betrug 72 Vol.-% mit einer entsprechenden Dichte von 469 g/l. Der Durchmesser des erhaltenen Materials in Form eines getrockneten zylindrischen Gelkörpers war deutlich geringer als der Durchmesser des Gelkörpers vor Beginn des Trocknungsprozesses.

### Beispiel 2:

a) 27,5 g einer klaren wässrigen Lösung eines Melamin-Formaldehyd-Vorkondensats mit einer Viskosität von weniger als 100 mPa*s und mit einem Gehalt von 19 Gew.-% und einem Molverhältnis Melamin zu Formaldehyd von 1 : 1,5 wurden bei 20°C in ein Becherglas gegeben.
b) Es wurden unter Rühren bei 20°C 2,5 g einer 100 gew.-%igen Ameisensäure zugefügt. Man erhielt eine klare, niedrigviskose Mischung. Anschließend wurde die Mischung 24 Stunden bei 60°C stehen gelassen, wobei sich ein Gel bildete.
c) Anschließend wurde das Gel aus dem Becherglas genommen, in 50g einer 5 gew.-%igen wässrigen Lösung von Glutaraldehyd gegeben und 2 Stunden auf 60°C erhitzt.
d) Die Flüssigkeit (Wasser, Glutaraldehyd und Ameisensäure) wurde durch 7 Tage langes Trocknen bei 20°C unter Atmosphärendruck entfernt.

Das erhaltene Material hatte ein Porenvolumen von 3,144 ml/g und einen volumengewichteten mittleren Porendurchmesser von 0,245 µm. Die Porosität betrug 84 Vol.-% mit einer entsprechenden Dichte von 267 g/l. Der Durchmesser des erhaltenen Materials in Form eines getrockneten zylindrischen Gelkörpers war nur geringfügig kleiner als der Durchmesser des Gelkörpers vor Beginn des Trocknungsprozesses.

### Beispiel 3:

a) 27,6 g einer klaren wässrigen Lösung eines Melamin-Formaldehyd-Vorkondensats mit einer Viskosität von weniger als 100 mPa*s und mit einem Gehalt von 19 Gew.-% und einem Molverhältnis Melamin zu Formaldehyd von 1 : 1,5 wurden bei 20°C in ein Becherglas gegeben.
b) Es wurden unter Rühren bei 20°C 2,4 g einer 100 gew.-%igen Ameisensäure zugefügt. Man erhielt eine klare, niedrigviskose Mischung. Anschließend wurde die Mischung 24 Stunden bei 60°C stehen gelassen, wobei sich ein Gel bildete.
c) Anschließend wurde das Gel aus dem Becherglas genommen, in 50g einer 5%igen, wässrigen Glyoxal-Lösung gegeben und 2 Stunden auf 60°C erhitzt.
d) Die Flüssigkeit (Wasser, Glyoxal und Ameisensäure) wurde durch 7 Tage langes Trocknen bei 20°C unter Atmosphärendruck entfernt.

Das erhaltene Material hatte ein Porenvolumen von 3,134 ml/g und einen volumengewichteten mittleren Porendurchmesser von 0,226 µm. Die Porosität betrug 84 Vol.-% mit einer entsprechenden Dichte von 268 g/l. Der Durchmesser des erhaltenen Materials in Form eines getrockneten zylindrischen Gelkörpers war nur geringfügig kleiner als der Durchmesser des Gelkörpers vor Beginn des Trocknungsprozesses.

### Beispiel 4:

a) 27,5 g einer klaren wässrigen Lösung eines Melamin-Formaldehyd-Vorkondensats mit einer Viskosität von weniger als 100 mPa*s und mit einem Gehalt von 19 Gew.-% und einem Molverhältnis Melamin zu Formaldehyd von 1 : 1,5 wurden bei 20°C in ein Becherglas gegeben.
b) Es wurden unter Rühren bei 20°C 2,5 g einer 100 gew.-%igen Ameisensäure zugefügt. Man erhielt eine klare, niedrigviskose Mischung. Anschließend wurde die Mischung 24 Stunden bei 60°C stehen gelassen, wobei sich ein Gel bildete.
c) Anschließend wurde das Gel aus dem Becherglas genommen, in 50g einer 2.5%igen, wässrigen Lösung von Propionaldehyd gegeben und 2 Stunden auf 60°C erhitzt.
d) Die Flüssigkeit (Wasser, Propionaldehyd und Ameisensäure) wurde durch 7 Tage langes Trocknen bei 20°C unter Atmosphärendruck entfernt.

Das erhaltene Material hatte ein Porenvolumen von 2,367 ml/g und einen volumengewichteten mittleren Porendurchmesser von 0,293 µm. Die Porosität betrug 80 Vol% mit einer entsprechenden Dichte von 338 g/l. Der Durchmesser des erhaltenen Materials in Form eines getrockneten zylindrischen Gelkörpers war nur geringfügig kleiner als der Durchmesser des Gelkörpers vor Beginn des Trocknungsprozesses.

### Beispiel 5V:

a) 7,5 g eines mit Butanol veretherten, hydrophoben Melamin-Formaldehyd-Harzes (Luwipal® 44 der BASF) wurden in 8,38 g Aceton in einem Becherglas gelöst. 1,36 g einer 37 gew.-%ige Salzsäure wurden in 8,37 g Aceton gelöst und mit Mischung aus a) vermengt.
b) Anschließend wurde die Mischung 3 Stunden bei 60°C stehen gelassen, wobei sich ein Gel bildete.
d) Daraufhin wurde das Gel aus Schritt b) aus dem Becherglas genommen und die Flüssigkeit durch 7 Tage langes Trocknen bei 20°C unter Atmosphärendruck entfernt.

Das erhaltene Material hatte ein Porenvolumen von 0,08 ml/g und einen volumengewichteten mittleren Porendurchmesser von 0,014 µm. Die Porosität betrug 11,7 Vol.-% bei einer entsprechenden Dichte von 1483 g/l. Der Durchmesser des erhaltenen Materials in Form eines getrockneten zylindrischen Gelkörpers war deutlich geringer als der Durchmesser des Gelkörpers vor Beginn des Trocknungsprozesses.

### Beispiel 6:

a) 7,5 g eines mit Butanol veretherten, hydrophoben Melamin-Formaldehyd-Harzes (Luwipal® 44 der BASF) wurden in 8,38 g Aceton in einem Becherglas gelöst. 1,36 g einer 37 Gew.-%ige Salzsäure wurden in 8,37 g Aceton gelöst und mit Mischung aus a) vermengt.
b) Anschließend wurde die Mischung 3 Stunden bei 60°C stehen gelassen, wobei sich ein Gel bildete.
c) Anschließend wurde das Gel aus dem Becherglas genommen, in 50 g einer wässrigen Lösung enthaltend 5 gew.-%ige Glyoxal-Lösung und 2 Gew.-% Calciumacetat-Monohydrat gegeben und 2 Stunden auf 80°C erhitzt.
d) Daraufhin wurde die Flüssigkeit durch 7 Tage langes Trocknen bei 20°C unter Atmosphärendruck entfernt.

Das erhaltene Material hatte ein Porenvolumen von 1,254 ml/g und einen volumengewichteten mittleren Porendurchmesser von 0,120 µm. Die Porosität betrug 68 Vol.-% bei einer entsprechenden Dichte von 541 g/l. Der Durchmesser des erhaltenen Materials in Form eines getrockneten zylindrischen Gelkörpers war deutlich geringer als der Durchmesser des Gelkörpers vor Beginn des Trocknungsprozesses, jedoch größer als im Beispiel 5V.

### Beispiel 7:

a) 7,5 g eines mit Butanol veretherten, hydrophoben Melamin-Formaldehyd-Harzes (Luwipal® 44 der BASF) wurden in 8,38 g Aceton in einem Becherglas gelöst. 1,36 g einer 37 gew.-%ige Salzsäure wurden in 8,37 g Aceton gelöst und mit Mischung aus a) vermengt.
b) Anschließend wurde die Mischung 3 Stunden bei 60°C stehen gelassen, wobei sich ein Gel bildete.
c) Anschließend erfolgte eine dreistündige Nachbehandlung mit einer 5 gew.-%igen wässrigen Lösung von Glutaraldehyd bei 80°C.
d) Daraufhin wurde die Flüssigkeit durch 7 Tage langes Trocknen bei 20°C unter Atmosphärendruck entfernt.

Das erhaltene Material hatte ein Porenvolumen von 4,43 ml/g und einen volumengewichteten mittleren Porendurchmesser von 0,745 µm. Die Porosität betrug 88,2 Vol.-% bei einer entsprechenden Dichte von 199 g/l. Der Durchmesser des erhaltenen Materials in Form eines getrockneten zylindrischen Gelkörpers war nur geringfügig kleiner als der Durchmesser des Gelkörpers vor Beginn des Trocknungsprozesses.

### Beispiel 8V:

a) Eine Lösung von 3,642 g Toluendiisocyanat (TDI) in 9,59 g Methylethylketon (MEK) wurde mit einer Lösung von 0,977 g Phloroglucin in 11,03 g MEK innig vermischt, entsprechend einem Überschuss an Isocyanat, und anschließend mit 5 µL 1,8-Diazabicyclo[5.4.0]undec-7-ene (DBU) als Katalysator versehen.
b) Die Gelierung wurde bei Raumtemperatur durch Stehenlassen durchgeführt (20°C). Die Mischung gelierte in weniger als 5 Minuten und wurde anschließend für 4 Stunden bei Raumtemperatur durch Stehenlassen gealtert.
d) Das so erhaltene Gel wurde bei Raumtemperatur zuerst 3,5 Stunden unter Atmosphärendruck und anschließend 3,5 Stunden im Vakuum bei 10 mbar getrocknet.

Das erhaltene Material wies keine messbare Porosität auf. Der Durchmesser des erhaltenen Materials in Form eines getrockneten zylindrischen Gelkörpers war deutlich geringer als der Durchmesser des Gelkörpers vor Beginn des Trocknungsprozesses.

### Beispiel 9:

a) Eine Lösung von 3,642 g Toluendiisocyanat (TDI) in 9,59 g Methylethylketon (MEK) wurde mit einer Lösung von 0,977 g Phloroglucin in 11,03 g MEK innig vermischt, entsprechend einem Überschuss an Isocyanat, und anschließend mit 5 µL 1,8-Diazabicyclo[5.4.0]undec-7-ene (DBU) als Katalysator versehen.
b) Die Gelierung wurde bei Raumtemperatur durch Stehenlassen durchgeführt (20°C). Die Mischung gelierte in weniger als 5 Minuten und wurde anschließend für 4 Stunden bei Raumtemperatur durch Stehenlassen gealtert.
c) Die Mischung wurde mit einer 10 gew.-%igen Lösung von 4,4'-Diaminodiphenylsulfon (DADPS) in MEK versetzt. Die Nachbehandlung wurde 60 Stunden bei 60°C durchgeführt.
d) Das so erhaltene Gel wurde bei Raumtemperatur zuerst 3,5 Stunden unter Atmosphärendruck und anschließend 3,5 Stunden im Vakuum bei 10 mbar getrocknet.

Das erhaltene Material hatte ein Porenvolumen von 0,429 ml/g und einen volumengewichteten mittleren Porendurchmesser von 0,023 µm. Die Porosität betrug 37,2 Vol.-% bei einer entsprechenden Dichte von 876 g/l. Der Durchmesser des erhaltenen Materials in Form eines getrockneten zylindrischen Gelkörpers war geringer als der Durchmesser des Gelkörpers vor Beginn des Trocknungsprozesses, jedoch größer als im Beispiel 8V.

## Patentansprüche

1. Verfahren zur Herstellung von organischen Xerogelen umfassend:
(a) Bereitstellen einer Zusammensetzung enthaltend eine organische Gelvorstufe (A) und ein Lösungsmittel (C);
(b) Umsetzung der Gelvorstufe (A) in Gegenwart des Lösungsmittels (C) zu einem Gel;
(c) Modifizierung des erhaltenen Gels mittels mindestens einer organischen Verbindung (D), welche weder in Schritt (a) noch in Schritt (b) zugegen war;
(d) Trocknen des modifizierten Gels durch Überführung des Lösungsmittels (C) in den gasförmigen Zustand bei einer Temperatur und einem Druck unterhalb der kritischen Temperatur und des kritischen Drucks des Lösungsmittels (C).

2. Verfahren nach Anspruch 1, wobei durch die Modifizierung des erhaltenen Gels dessen Verträglichkeit mit dem Lösungsmittel (C) verringert wird.

3. Verfahren nach Anspruch 1 oder 2, wobei die organische Verbindung (D) mit reaktiven Gruppen des in Schritt (b) erhaltenen Gels reagiert, welche bereits in der Gelvorstufe (A) vorhanden waren.

4. Verfahren nach den Ansprüchen 1 bis 3, wobei die organische Gelvorstufe (A) mindestens ein mehrfunktionelles Amin oder mindestens eine phenolische Verbindung und mindestens ein Aldehyd enthält.

5. Verfahren nach Anspruch 4, wobei die organische Gelvorstufe (A) Melamin als mehrfunktionelles Amin und Formaldehyd als Aldehyd enthält.

6. Verfahren nach den Ansprüchen 4 oder 5, wobei zur Modifizierung des Gels als Verbindung (D) mindestens ein Dialdehyd verwendet wird.

7. Verfahren nach den Ansprüchen 1 bis 3, wobei die organische Gelvorstufe (A) als Komponente (a1) mindestens ein Polyisocyanat und als Komponente (a2) mindestens eine gegenüber Isocyanaten reaktive Verbindung enthält, und wobei die Komponenten (a1) und (a2) jeweils eine Funktionalität von mindestens zwei aufweisen und die Summe aus der Funktionalität der Komponente (a1) und der Funktionalität der Komponente (a2) mindestens 4,5 beträgt.

8. Verfahren nach Anspruch 7, wobei die reaktiven funktionellen Gruppen einer der beiden Komponenten (a1) oder (a2) in der Gelvorstufe (A) im molaren Überschuss von 5 bis 15 mol-% relativ zu den funktionellen Gruppen der jeweils anderen Komponente vorliegen.

9. Verfahren nach den Ansprüchen 7 oder 8, wobei die organische Gelvorstufe (A) als Komponente (a1) mindestens ein aromatisches Polyisocyanat und als Komponente (a2) mindestens ein aliphatisches Polyol enthält und wobei die Komponente (a2) eine OH-Funktionalität von 2,5 bis 8 aufweist.

10. Verfahren nach den Ansprüchen 7 oder 8, wobei die organische Gelvorstufe (A) als Komponente (a1) mindestens ein aromatisches Polyisocyanat und als Komponente (a2) mindestens eine phenolische Verbindung enthält.

11. Verfahren nach den Ansprüchen 7 oder 8, wobei die organische Gelvorstufe (A) als Komponente (a1) mindestens ein Polyisocyanat und als Komponente (a2) mindestens eine hyperverzweigte Verbindung enthält.

12. Verfahren nach den Ansprüchen 7 oder 8, wobei die organische Gelvorstufe (A) als Komponente (a1) mindestens ein Polyisocyanat und als Komponente (a2) mindestens ein aromatisches Amin enthält.

13. Verfahren nach den Ansprüchen 7 bis 12, wobei zur Modifizierung des Gels als Verbindung (D) mindestens ein aromatisches Diamin verwendet wird.

14. Verfahren nach Anspruch 13, wobei zur Modifizierung des Gels als Verbindung (D) mindestens ein Diamino-Diphenylsulfon verwendet wird.

15. Organische Xerogele erhältlich gemäß den Ansprüchen 1 bis 14.

16. Verwendung der organischen Xerogele gemäß Anspruch 15 als Dämmstoff.

17. Verwendung der organischen Xerogele gemäß Anspruch 15 zur thermischen Isolation.

## Claims

1. A process for preparing organic xerogels, comprising:
(a) providing a composition comprising an organic gel precursor (A) and a solvent (C);
(b) converting the gel precursor (A) in the presence of the solvent (C) to a gel;
(c) modifying the resulting gel by means of at least one organic compound (D) which was present neither in step (a) nor in step (b);
(d) drying the modified gel by converting the solvent (C) to the gaseous state at a temperature and a pressure below the critical temperature and the critical pressure of the solvent (C).

2. The process according to claim 1, wherein the modification of the resulting gel reduces its compatibility with the solvent (C).

3. The process according to claim 1 or 2, wherein the organic compound (D) reacts with reactive groups of the gel obtained in step (b) which were already present in the gel precursor (A).

4. The process according to claims 1 to 3, wherein the organic gel precursor (A) comprises at least one polyfunctional amine or at least one phenolic compound and at least one aldehyde.

5. The process according to claim 4, wherein the organic gel precursor (A) comprises melamine as the polyfunctional amine and formaldehyde as the aldehyde.

6. The process according to claims 4 or 5, wherein the gel is modified by using at least one dialdehyde as compound (D).

7. The process according to claims 1 to 3, wherein the organic gel precursor (A) comprises at least one polyisocyanate as component (a1) and at least one compound reactive toward isocyanates as component (a2), and wherein components (a1) and (a2) each have a functionality of at least two and the sum of the functionality of component (a1) and of the functionality of component (a2) is at least 4.5.

8. The process according to claim 7, wherein the reactive functional groups of one of the two components (a1) or (a2) are present in the gel precursor (A) in a molar excess of from 5 to 15 mol% relative to the functional groups of the other component in each case.

9. The process according to claims 7 or 8, wherein the organic gel precursor (A) comprises at least one aromatic polyisocyanate as component (a1) and at least one aliphatic polyol as component (a2), and wherein component (a2) has an OH functionality of from 2.5 to 8.

10. The process according to claims 7 or 8, wherein the organic gel precursor (A) comprises at least one aromatic polyisocyanate as component (a1) and at least one phenolic compound as component (a2).

11. The process according to claims 7 or 8, wherein the organic gel precursor (A) comprises at least one polyisocyanate as component (a1) and at least one hyperbranched compound as component (a2).

12. The process according to claims 7 or 8, wherein the organic gel precursor (A) comprises at least one polyisocyanate as component (a1) and at least one aromatic amine as component (a2).

13. The process according to claims 7 to 12, wherein the gel is modified by using at least one aromatic diamine as compound (D).

14. The process according to claim 13, wherein the gel is modified by using at least one diaminodiphenyl sulfone as compound (D).

15. An organic xerogel obtainable according to claims 1 to 14.

16. The use of the organic xerogels according to claim 15 as an insulating material.

17. The use of the organic xerogels according to claim 15 for thermal insulation.

## Revendications

1. Procédé pour la préparation de xérogels organiques, comprenant :
(a) la fourniture d'une composition contenant un précurseur de gel organique (A) et un solvant (C) ;
(b) la conversion du précurseur de gel (A) en un gel en présence du solvant (C) ;
(c) la modification du gel obtenu au moyen d'un composé organique (D) qui n'était présent ni dans l'étape (a) ni dans l'étape (b) ;
(d) le séchage du gel modifié, par transformation du solvant (C) à l'état gazeux, à une température et sous une pression inférieures à la température critique et à la pression critique du solvant (C).

2. Procédé selon la revendication 1, **caractérisé en ce que** par la modification du gel obtenu sa compatibilité avec le solvant (C) est diminuée.

3. Procédé selon la revendication 1 ou 2, dans lequel le composé organique (D) réagit avec des groupes réactifs du gel obtenu dans l'étape (b), qui étaient déjà présents dans le précurseur de gel (A).

4. Procédé selon les revendications 1 à 3, dans lequel le précurseur de gel organique (A) contient au moins une amine polyfonctionnelle ou au moins un composé phénolique et au moins un aldéhyde.

5. Procédé selon la revendication 4, dans lequel le précurseur de gel (A) contient de la mélamine en tant qu'amine polyfonctionnelle et du formaldéhyde en tant qu'aldéhyde.

6. Procédé selon la revendication 4 ou 5, dans lequel pour la modification de gel on utilise comme composé (D) au moins un dialdéhyde.

7. Procédé selon les revendications 1 à 3, dans lequel le précurseur de gel organique (A) contient en tant que composant (a1) au moins un polyisocyanate et en tant que composant (a2) au moins un composé réactif vis-à-vis d'isocyanates, et dans lequel les composants (a1) et (a2) présentent chacun une fonctionnalité d'au moins deux et la somme de la fonctionnalité du composant (a1) et de la fonctionnalité du composant (a2) est égale au moins à 4,5.

8. Procédé selon la revendication 7, dans lequel les groupes fonctionnels réactifs de l'un des deux composants (a1) ou (a2) dans le précurseur de gel (A) sont présents en un excès molaire de 5 à 15 % en moles par rapport aux groupes fonctionnels de l'autre composant.

9. Procédé selon la revendication 7 ou 8, dans lequel le précurseur de gel organique (A) contient en tant que composant (a1) au moins un polyisocyanate aromatique et en tant que composant (a2) au moins un polyol aliphatique et dans lequel le composant (a2) présente une fonctionnalité OH de 2,5 à 8.

10. Procédé selon la revendication 7 ou 8, dans lequel le précurseur de gel organique (A) contient en tant que composant (a1) au moins un polyisocyanate aromatique et en tant que composant (a2) au moins un composé phénolique.

11. Procédé selon la revendication 7 ou 8, dans lequel le précurseur de gel organique (A) contient en tant que composant (a1) au moins un polyisocyanate et en tant que composant (a2) au moins un composé hyper-ramifié.

12. Procédé selon la revendication 7 ou 8, dans lequel le précurseur de gel organique (A) contient en tant que composant (a1) au moins un polyisocyanate et en tant que composant (a2) au moins une amine aromatique.

13. Procédé selon les revendications 7 à 12, dans lequel pour la modification du gel on utilise comme composé (D) au moins une diamine aromatique.

14. Procédé selon la revendication 13, dans lequel pour la modification du gel on utilise comme composé (D) au moins une diamino-diphénylsulfone.

15. Xérogels organiques pouvant être obtenus selon les revendications 1 à 14.

16. Utilisation des xérogels organiques selon la revendication 15 en tant qu'isolant.

17. Utilisation des xérogels organiques selon la revendication 15 pour l'isolation thermique.
